# EUROPÄISCHE PATENTSCHRIFT

(11) **EP 4 279 656 B1**
(45) Veröffentlichungstag und Bekanntmachung des Hinweises auf die Patenterteilung: **03.07.2024**
(21) Anmeldenummer: 23173376.7
(22) Anmeldetag: 15.05.2023
(51) Int. Cl.: D21H 19/20, B32B 29/00, B32B 38/06, D21H 19/68, D21H 19/82, D21H 25/04, D21H 25/06, D21H 27/02, D21H 27/18

(54) **VERFAHREN ZUR HERSTELLUNG EINES BAHNFÖRMIGEN, EINE STRUKTURIERTE OBERFLÄCHE AUFWEISENDEN VERBUNDMATERIALS, DERARTIGES VERBUNDMATERIAL UND DESSEN VERWENDUNG**
METHOD FOR PRODUCING A WEB-SHAPED COMPOSITE MATERIAL HAVING A STRUCTURED SURFACE, SUCH COMPOSITE MATERIAL AND USE THEREOF
PROCÉDÉ DE FABRICATION D'UN MATÉRIAU COMPOSITE EN FORME DE BANDE PRÉSENTANT UNE SURFACE STRUCTURÉE, MATÉRIAU COMPOSITE ET SON UTILISATION

(30) Priorität: 19.05.2022 EP 22174214
(43) Veröffentlichungstag der Anmeldung: 22.11.2023
(73) Patentinhaber: Fritz Egger GmbH & Co. OG, 6380 St. Johann in Tirol (AT)
(72) Erfinder: Kemmerling, Frank, 59929 Brilon (DE)
(74) Vertreter: Cohausz & Florack

(56) Entgegenhaltungen:
- EP-A1- 3 345 761
- US-A1- 2019 310 546

## Beschreibung

Die Erfindung betrifft ein Verfahren zur Herstellung eines bahnförmigen, eine strukturierte Oberfläche aufweisenden Verbundmaterials, umfassend die Schritte: Bereitstellen eines bahnförmigen Trägermaterials aus Papier und/oder Kunststoff, Aufbringen einer UV-härtbaren Lackschicht aus acryliertem Oligomer auf das Trägermaterial, Erzeugen einer dreidimensionalen Oberflächenstruktur in der auf das Trägermaterial aufgebrachten Lackschicht und zumindest teilweises Härten der Lackschicht durch Bestrahlung mit energiereicher Strahlung, vorzugsweise UV-Licht.

Unter einer Bestrahlung mit energiereicher Strahlung werden im Kontext der vorliegenden Erfindung insbesondere eine Bestrahlung mit UV-Strahlen (UV-Licht) und auch eine Bestrahlung mit Elektronenstrahlen verstanden.

Insbesondere betrifft die Erfindung ein bahnförmiges Verbundmaterial, vorzugsweise hergestellt nach einem Verfahren der oben genannten Art, mit einem bahnförmigen Trägermaterial aus Papier und/oder Kunststoff und einer auf dem Trägermaterial aufgebrachten Lackschicht aus acryliertem Oligomer, die eine dreidimensionale Oberflächenstruktur aufweist.

Zudem betrifft die Erfindung eine Verwendung des erfindungsgemäßen Verbundmaterials als Strukturgeber zum Texturieren einer prägefähigen Materialoberfläche, insbesondere einer harzhaltigen Laminatoberfläche, oder als Beschichtungsmaterial für Werkstückoberflächen.

Im Stand der Technik sind dekorative Laminate bekannt, die beispielsweise als Fußbodenbelag oder als Oberflächenmaterial für Wände, Decken oder Möbel wie Schränke, Arbeits- und Tischplatten oder ähnliches verwendet werden. Derartige Laminate sind üblicherweise aus einem Substrat, z. B. einer MDF- oder HDF-Platte oder harzgetränkten Papierlagen, einer Dekorschicht und einer darauf aufgebrachten transparenten Schutzschicht aufgebaut. Die Schutzschicht soll die Dekorschicht vor Verschleiß, insbesondere Abrieb schützen. Beispielsweise weisen klassische Fußbodenlaminatpaneele ein Melaminharz-imprägniertes, transparent aushärtendes Overlaypapier als Schutzschicht auf. Das Material der Schutzschicht enthält dabei häufig die Verschleißfestigkeit erhöhende Partikel, zum Beispiel Quarz- oder Korund-Partikel.

Um mit dekorativen Laminaten natürliche Materialien wie zum Beispiel Holzdielen oder Steinplatten in optischer sowie haptischer Hinsicht naturgetreu nachzuahmen, werden solche Laminate im Stand der Technik mit einer dreidimensionalen Oberflächenstruktur versehen, die vorzugsweise mit dem Druckbild der Dekorschicht des Laminats korrespondiert. Beispielsweise werden zur Nachahmung von Holzdielen beim Verpressen eines ein Holzdekorpapier aufweisenden Laminataufbaus Vertiefungen in die transparente Schutzschicht eingepresst, wobei die Vertiefungen im Wesentlichen in Überdeckung zu in dem Holzdekor abgebildeten Holzporen liegen. Derartige Vertiefungen, die korrespondierend zu abgebildeten Poren ausgebildet sind, werden in Fachkreisen auch als Synchronporen bezeichnet.

Auch sind im Stand der Technik dekorative Laminate mit Fantasie- oder einfarbigen Dekoren (Unidekoren) bekannt, zum Beispiel solche Laminate für Arbeits- oder Tischplatten, deren transparente Schutzschicht oder oberste Schicht mit einer dreidimensionalen Oberflächenstruktur versehen ist.

Zur Herstellung von Laminaten mit dreidimensionaler Oberflächenstruktur werden im Stand der Technik beispielsweise Pressbleche verwendet, die eine durch Gravieren erzeugte Oberflächenstruktur aufweisen. Das Laminat wird dabei mittels einer sogenannten Kurztaktpresse (KT-Presse) unter hohem Druck und hoher Temperatur hergestellt, wobei das gravierte Pressblech auf einer der transparent aushärtenden Schutzschicht zugewandten Pressenplatte montiert ist. Beim Verpressen des Laminats herrschen Temperaturen von z. B. über 120° C und ein Druck von über 50 bar. Die Herstellung gravierter Pressbleche ist kostenaufwendig. Zudem sind die Pressbleche durch die hohe Druckbeanspruchung erheblichem Verschleiß unterworfen.

Des Weiteren ist es im Stand der Technik bekannt, harzgetränkte Laminatoberflächen mittels bahnförmiger Strukturgeber - auch Prägematrizen genannt - unter Anwendung von Druck und Temperatur zu texturieren, d.h. die Laminatoberfläche mit einer dreidimensionalen Oberflächenstruktur zu versehen.

Ein Verfahren zur Herstellung eines solchen bahnförmigen Strukturgebers ist beispielsweise in der EP 2 146 805 beschrieben. Das Verfahren sieht vor, eine aushärtbare Beschichtung auf eine bahnförmige Kunststofffolie aufzubringen und anschließend mit einer Strukturwalze in Kontakt zu bringen. Während des Kontakts mit der Strukturwalze wird die Beschichtung mittels Elektronen- oder UV-Strahlung ausgehärtet, so dass sich die dreidimensionale Struktur dauerhaft in die Beschichtung der Kunststofffolie überträgt. Die ausgehärtete Beschichtung wird dann zusammen mit der Kunststofffolie von der Strukturwalze entfernt. Die Beschichtung enthält dabei, vor dem Härten, 20 bis 50% eines Acryl-Oligomers, 15 bis 35% eines monofunktionalen Monomers und 20 bis 50% eines multifunktionalen Monomers zum Vernetzen. Eine Aushärtung der Beschichtung mittels Elektronen-Strahlung ist mit hohen Investitionskosten und einem hohen Energieverbrauch verbunden. Ferner hat sich beim Nacharbeiten des Verfahrens nach EP 2 146 805 gezeigt, dass oftmals die Haftung verschiedener Harze oder strahlenhärtender Lacke auf dem bahnförmigen Trägermaterial ungenügend ist, so dass sich ein Teil des Harzes oder Lacks in der Struktur der Strukturwalze ablegt und dort aushärtet. Dies hat zur Folge, dass sich sodann ein sich wiederholender Oberflächenfehler in der ausgehärteten Beschichtung auf dem bahnförmigen Trägermaterial abzeichnet. Die Reinigung der Strukturwalze, so dass Harz- oder Lackablagerungen aus deren Struktur vollständig entfernt werden, ist sehr aufwendig.

Die EP 3 720 673 offenbart ein weiteres Verfahren zur Übertragung einer Prägestruktur auf wenigstens einen Teil einer Oberfläche eines Beschichtungsmittels. Die wesentlichen Schritte des Verfahrens werden unter Verwendung eines als Prägematrize eines Prägewerkzeugs eingesetzten Verbundes aus einem Substrat und einer geprägten und zumindest teilweise ausgehärteten Beschichtung durchgeführt. Das zur Herstellung der Beschichtung des Verbundes eingesetzte Beschichtungsmittel ist ein strahlenhärtbares Beschichtungsmittel definierter Zusammensetzung. Die EP 3 720 673 lehrt, dass sich zwischen dem Substrat und der Beschichtung des Verbunds vorzugsweise keine weitere Schicht befindet. Interne Versuche haben jedoch ergeben, dass sich mit dem Verfahren nach EP 3 720 673 keine zufriedenstellende Haftung zwischen dem Substrat und einer vergleichsweise harten Beschichtung ergibt, vielmehr kommt es bei der Verwendung eines entsprechenden Verbundes als Prägematrize unter üblichen Pressbedingungen mit Temperaturen um 185° C und einem Druck von über 50 bar zu Ablösungen (Enthaftungen) der Beschichtung von dem Substrat.

In der DE 10 2013 007 429 wird die Verwendung einer an mindestens einer Oberfläche angeätzten Polyethylenterephthalat-Folie (PET-Folie) zur Herstellung einer Oberflächenfolie mit Texturierung oder einer Prägematrize mit Texturierung vorgeschlagen. Die angeätzte PET-Folie soll gegenüber den zur Beschichtung verwendeten Harzen oder Lacken eine hervorragende Benetzung und Haftung aufweisen, so dass im Herstellungsverfahren der texturierten Oberflächenfolie bzw. Prägematrize keine Ablagerung des Harzes oder Lacks auf eine zum Texturieren verwendete Strukturwalze erfolgt. Zum Anätzen der PET-Folie wird in der DE 10 2013 007 429 die Verwendung von Trichloressigsäure in Gegenwart von gefällter Kieselsäure vorgeschlagen. Diese Behandlung von PET-Folien sorgt zwar für Haftungsverbesserungen, jedoch ist eine solche Behandlung unter dem Aspekt des Umweltschutzes bedenklich. Zudem sind solche Folien im Markt nur schwierig verfügbar.

Aus der EP 2 527 408 ist ein Verfahren zum Herstellen einer bahnförmigen Folie, insbesondere Beschichtungsfolie für einen Trägerkörper bekannt, wobei die Folie eine mattierte Oberfläche aufweist. Das Verfahren umfasst die Schritte: Bereitstellen eines eine Kunststoff-, Metall- oder Papierfolie ausbildenden Substrats, Beschichten des Substrats mit einem ein Acrylat sowie Farbpigmente aufweisenden, lösungsmittelfreien und wasserfreien sowie elektronenstrahlhärtbaren Lack, Bestrahlen des beschichteten Substrats im unvernetzten Zustand des Lacks von der Beschichtungsseite mit monochromatischer UV-Strahlung, beispielsweise mittels eines UV-Strahlung mit einer Wellenlänge von 172 nm emittierenden Excimer-UV-Strahlers, zum Erzeugen einer matten Oberfläche des Lacks, ohne diesen durchzuhärten oder vollständig zu vernetzen, und nachfolgendes Bestrahlen der mattierten Beschichtung mit Elektronenstrahlen zum Vernetzen und Durchhärten der Beschichtung. Dem Lack wird dabei ein eine Kratzfestigkeit der durchgehärteten Beschichtung erhöhendes Oligomer zugesetzt; dem Lack ist kein im Bereich der monochromatischen UV-Strahlung wirksamer Photoinitiator zugesetzt.

Die WO 2020/190751 offenbart eine texturierte Pressplatte zur Verwendung bei der Herstellung von dekorativem Laminat. Die texturierte Pressplatte wird durch ein Verfahren hergestellt, das folgende Schritte umfasst: Aufbringen einer UV-härtbaren Acrylatmischung auf eine Oberfläche eines Pressplattensubstrats, Vorhärten mittels eines Excimer-UV-Strahlers, um Mikrofalten zu erzeugen, und Bestrahlen der UV-härtbaren Acrylatmischung mit Elektronenstrahlung, um die UV-bestrahlte Schicht vollständig auszuhärten und eine strukturierte Beschichtungsschicht zu bilden.

Davon ausgehend liegt der Erfindung die Aufgabe zugrunde, ein Verfahren der eingangs genannten Art anzugeben, mit dem sich ein bahnförmiges, eine strukturierte Oberfläche aufweisendes Verbundmaterial, welches sich durch eine hohe mechanische und thermische Beständigkeit für die Verwendung als Strukturgeber oder als Beschichtungsmaterial auszeichnet, kostengünstig herstellen lässt. Insbesondere soll ein entsprechendes Verbundmaterial bereitgestellt werden, das sich als Strukturgeber zum Texturieren einer prägefähigen Materialoberfläche oder als robustes Beschichtungsmaterial für Werkstückoberflächen eignet und dementsprechend vorteilhaft verwendet werden kann.

Diese Aufgabe wird durch ein Verfahren mit den in Anspruch 1 angegebenen Merkmalen bzw. durch ein Verbundmaterial mit den in Anspruch 17 angegebenen Merkmalen gelöst. Vorteilhafte Ausgestaltungen der Erfindung sind Gegenstand der auf Anspruch 1 rückbezogenen Ansprüche. Erfindungsgemäße Verwendungen des Verbundmaterials sind Gegenstand der Ansprüche 18 und 19.

Das erfindungsgemäße Verfahren ist dadurch gekennzeichnet, dass vor dem Aufbringen der UV-härtbaren Lackschicht mindestens eine Haftvermittlerschicht enthaltend acryliertes Oligomer, einen Reaktivverdünner und einen auf energiereiche Strahlung, vorzugsweise UV-Strahlung reagierenden Photoinitiator auf das Trägermaterial aufgebracht wird, und dass die die dreidimensionale Oberflächenstruktur aufweisende Lackschicht soweit gehärtet wird, dass das Verbundmaterial im fertigen Zustand eine mittlere Martenshärte nach DIN EN ISO 14577-1 (2003-05) im Bereich von 10 bis 80 N/mm², vorzugsweise im Bereich von 30 bis 80 N/mm² aufweist, wobei der zur Messung der Martenshärte als Prüfkörper verwendete Eindringkörper in die strukturierte Oberfläche der Lackschicht gedrückt wird.

Die die dreidimensionale Oberflächenstruktur aufweisende Lackschicht wird in dem erfindungsgemäßen Verfahren vorzugsweise durch Bestrahlung mit energiereicher Strahlung, besonders bevorzugt mit UV-Licht soweit gehärtet, dass das Verbundmaterial im fertigen Zustand eine mittlere Martenshärte nach DIN EN ISO 14577-1 (2003-05) im oben genannten Bereich aufweist.

Durch die mindestens eine erfindungsgemäße Haftvermittlerschicht (Primerschicht) lässt sich mit einem Verfahren der eingangs genannten Art ein bahnförmiges, eine strukturierte Oberfläche aufweisendes Verbundmaterial, welches sich durch eine hohe mechanische und thermische Beständigkeit für die Verwendung als Strukturgeber oder als Beschichtungsmaterial auszeichnet, kostengünstig herstellen.

Das erfindungsgemäß hergestellte bzw. ausgeführte Verbundmaterial lässt sich vorteilhaft als Strukturgeber zum Texturieren einer prägefähigen Materialoberfläche und alternativ auch als Beschichtungsmaterial für Werkstückoberflächen verwenden.

Die erfindungsgemäße Haftvermittlerschicht ermöglicht, dass die durch energiereiche Strahlung, vorzugsweise UV-Licht, härtbare Lackschicht nach dem Erzeugen einer dreidimensionalen Oberflächenstruktur auf der Lackschicht und einem anschließenden teilweisen bzw. vollständigen Härten der Lackschicht durch energiereiche Strahlung, vorzugsweise UV-Bestrahlung, sehr gut an dem Trägermaterial haftet, so dass es weder beim Entfernen der gehärteten Lackschicht samt Trägermaterial von einer zum Erzeugen bzw. Formen der dreidimensionalen Oberflächenstruktur verwendeten Prägevorrichtung noch beim Entfernen eines so hergestellten Strukturgebers von einer damit texturierten Material- oder Laminatoberfläche, zu einer mit bloßem Auge sichtbaren oder inakzeptablen Enthaftung oder Ablösung der strukturierten Lackschicht von dem Trägermaterial kommt.

Die erfindungsgemäße Haftvermittlerschicht ist auch hinsichtlich einer Verwendung des bahnförmigen, eine strukturierte Oberfläche aufweisenden Verbundmaterials als Beschichtungsmaterial für Werkstückoberflächen von Vorteil. Bei Verwendung des erfindungsgemäßen Verbundmaterials als Beschichtungsmaterial für stark beanspruchte Oberflächen wie beispielsweise Oberflächen von Fußbodenpaneelen verbessert die Haftvermittlerschicht die Abrieb- und Kratzfestigkeit der betreffenden Oberfläche erheblich. Das erfindungsgemäße Verbundmaterial zeichnet sich durch eine sehr gute Abrieb- und Kratzfestigkeit bei Einsatz als Beschichtungsmaterial für stark beanspruchte Oberflächen wie solche von Fußböden aus. Des Weiteren kann durch die Haftvermittlerschicht verhindert werden, dass es bei einem Zuschnitt von mit dem Verbundmaterial beschichteten Werkstücken, beispielsweise Werkstückplatten, in kleinere Formate oder bei einer Kantenbearbeitung entsprechender Werkstücke zu einer Enthaftung oder Ablösung der strukturierten Lackschicht von dem Trägermaterial an den Schnittkanten bzw. bearbeiteten Werkstückkanten kommt. Des Weiteren kann durch die erfindungsgemäße Haftvermittlerschicht verhindert werden, dass es bei einer Verwendung des Verbundmaterials als Beschichtungsmaterial für Werkstückoberflächen, die einen deutlich gekrümmten Oberflächenbereich, beispielsweise eine abgerundete Plattenkante aufweisen, zu einer Enthaftung oder Ablösung der strukturierten Lackschicht von dem Trägermaterial an dem gekrümmten Oberflächenbereich kommt. Die erfindungsgemäße Haftvermittlerschicht ist insbesondere hinsichtlich einer Verwendung des Verbundmaterials als Beschichtungsmaterial für die Herstellung von sogenannten Hochdrucklaminaten (HPL) sowie von durch kontinuierliches Pressen erzeugten Laminaten (CPL) von Vorteil, einschließlich in sogenannten Postforming-Verfahren. Der Fachbegriff Postforming bezeichnet das nachträgliche Verformen (Anformen) einer bereits aufgebrachten Oberflächenbeschichtung von Werkstoffplatten entlang eines Kantenprofils. Das erfindungsgemäße Verbundmaterial wird in einem solchen Fall, d.h. beim Beschichten einer eine profilierte Kante aufweisenden Werkstoffplatte über die profilierte Kante stehen gelassen. Das überstehende Verbundmaterial wird dann in einem nachfolgenden Prozess mittels einer Postformingmaschine an die profilierte Kante angeleimt oder angeklebt. So hergestellte Bauteile finden dort Anwendung, wo Holzwerkstoffe oder andere zellulosebasierte Trägersubstrate und ihre Kanten besonders starker Belastung durch Feuchtigkeit, Chemikalien und/oder mechanischer Belastung ausgesetzt sind, beispielsweise bei Bad- und Küchenmöbeln sowie bei Empfangs- und Verkaufstresen.

Für die Bestimmung der Haftung von Beschichtungen ist die Gitterschnittprüfung nach DIN EN ISO 2409:2013 (Juni 2013) üblich. Das Prüfergebnis liefert zwar keine direkten Messwerte, kann aber anhand eines Vergleichs mit Standardbildern, die verschiedene, benotete Schädigungsgrade (Kennwerte) zeigen, beurteilt werden. Als Prüfgerät schreibt die Norm Schneidemesser bestimmter Form und Abmessungen vor. Zur Messung mit einem Mehrschneidengerät wird in die zu beurteilende Beschichtung ein bis auf den Untergrund durchgehendes Schnittband aus mehreren parallelen Einkerbungen gezogen. Anschließend wird im rechten Winkel dazu ein weiteres Schnittband eingeritzt. So entsteht ein Gitter mit einer Vielzahl von Quadraten, dem sogenannten Gitterschnitt. Zur Auswertung wird ein Klebeband mit definierter Haftkraft auf den Gitterschnitt gedrückt und anschließend von der Oberfläche gezogen, um enthaftete Teilstücke zu entfernen. Durch Vergleich mit den Standardbildern werden die Kennwerte Gt0 bis Gt5 vergeben, wobei Gt0 einer geringen Schädigung entspricht, bei der kein Teilstück der Beschichtung abgeplatzt ist, wohingegen Gt5 einer sehr hohen Enthaftung bzw. Schädigung entspricht, bei der die abgeplatzte Fläche der Beschichtung mehr als 65% der Teilstücke beträgt.

Mit dem erfindungsgemäßen Verfahren konnten Verbundmaterialien zur Verwendung als Strukturgeber für ein Texturieren von prägefähigen Materialoberflächen sowie solche zur Verwendung als Beschichtungsmaterial für Werkstückoberflächen mit sehr guter Haftung der strukturierten Lackschicht auf dem Trägermaterial hergestellt werden. Die Gitterschnittprüfung nach DIN EN ISO 2409:2013 (Juni 2013) ergab bei den erfindungsgemäß hergestellten Verbundmaterialien zur Verwendung als Strukturgeber bzw. zur Verwendung als Beschichtungsmaterial für Werkstückoberflächen einen Gitterschnitt-Kennwert von 0 bis kleiner/gleich 0,5.

Die Haftvermittlerschicht ermöglicht bei dem durch energiereiche Strahlung, vorzugsweise UV-Licht härtbaren Lack ein weites Verarbeitungsspektrum von elastisch bis hart. Des Weiteren ermöglicht der in dem erfindungsgemäßen Verfahren verwendete, durch energiereiche Strahlung, vorzugsweise UV-Licht, härtbare Lack aus acryliertem Oligomer die Einstellung einer hohen Härte der daraus erzeugten Lackschicht bzw. der darin erzeugten dreidimensionalen Oberflächenstruktur. Das bahnförmige, eine strukturierte Oberfläche aufweisende Verbundmaterial, das insbesondere als Strukturgeber zum Texturieren einer prägefähigen Materialoberfläche verwendbar ist, weist erfindungsgemäß im fertigen Zustand eine mittlere Martenshärte nach DIN EN ISO 14577 -1 (2003-05) im Bereich von 10 bis 80 N/mm², vorzugsweise im Bereich von 30 bis 80 N/mm² auf. Dies ist für eine hohe mechanische und thermische Beständigkeit des Verbundmaterials bei seiner Verwendung in einer beheizten Presse günstig. Die relativ harte dreidimensionale Oberflächenstruktur des Verbundmaterials ermöglicht eine lange Nutzungsdauer, insbesondere als Strukturgeber oder als Beschichtungsmaterial für stark beanspruchte Werkstückoberflächen. Zudem ist eine hohe Härte der Lackschicht einschließlich der dreidimensionalen Oberflächenstruktur zur Erzielung einer hohen Abformgenauigkeit von Vorteil, und zwar insbesondere hinsichtlich der Abformgenauigkeit beim Einpressen einer negativen Struktur in eine prägefähige Materialoberfläche bzw. harzhaltige Laminatoberfläche. Damit lassen sich zum Beispiel entsprechend texturierte Fußbodenpaneele oder Schichtstoffplatten herstellen, die eine relativ hohe Oberflächenrauhigkeit oder Rautiefe Rz nach DIN EN ISO 4287 (2009-11) aufweisen.

Bei der Bestimmung der Eindring- oder Martenshärte nach DIN EN ISO 14577 -1 (2003-05) werden die Prüfkraft F und die Eindringtiefe h während der Belastungs- und Entlastungsphase kontinuierlich gemessen. Die Martenshärte (HM) wird definiert als das Verhältnis der Maximalkraft F zu der dazugehörigen Kontaktfläche des Prüfkörpers und wird in der Einheit N/mm² angegeben. Als Prüfkörper (Eindringkörper) wird entweder eine Pyramide oder ein kugelförmiger Eindringkörper langsam und mit konstanter Geschwindigkeit in die zu prüfende Oberfläche gedrückt. Die Umrechnung der Eindringtiefe zur Kontaktoberfläche muss für jede Eindringkörperform bestimmt werden. Die Kontaktoberfläche wird für die üblicherweise als Eindringkörper verwendete Vickers- oder Berkovich-Pyramide durch das Produkt aus dem Quadrat der Eindringtiefe h und der Konstanten 26,43 errechnet. Die sogenannte Martenshärte (HM) errechnet sich dann nach: HM = F / (26,43 · h²).

Die Martenshärte wird beispielsweise mittels eines Messgeräts der Bezeichnung FischerScope HM2000S der Firma Helmut Fischer bei einer Temperatur von ca. 23° C und einer relativen Luftfeuchte von ca. 50% gemessen. Die Messung erfolgt mit einem Prüfbereich von 300 mN / 20s bis zu einer maximalen Prüfkraft von 300 mN gemäß DIN EN ISO 14577 -1 (2003-05).

Nach einer vorteilhaften Ausgestaltung des erfindungsgemäßen Verfahrens wird die mindestens eine Haftvermittlerschicht mit einer Schichtdicke im Bereich von 0,5 bis 12 µm, vorzugsweise im Bereich von 1 bis 10 µm, besonders bevorzugt im Bereich von 2 bis 5 µm, bezogen auf den Trockenzustand der Haftvermittlerschicht, auf das Trägermaterial aufgebracht. Die Schichtdicke der Haftvermittlerschicht wird bevorzugt möglichst dünn aufgebracht bzw. ausgebildet. Der Erfinder hat überraschend gefunden, dass sich hierdurch eine besonders gute Verbindung der Lackschicht mit dem Trägermaterial erzielen lässt. Es wird seitens des Erfinders angenommen, dass die möglichst dünn ausgebildete Haftvermittlerschicht eine Verbindung der Lackschicht mit dem Trägermaterial verbessert bzw. verstärkt, indem die dünne Haftvermittlerschicht zugleich eine chemische Bindung zwischen der Substratoberfläche des Trägermaterials und dem Bindemittel der Lackschicht bewirkt.

Die Haftvermittlerschicht wird vor dem Aufbringen der UV-härtbaren Lackschicht vorzugsweise soweit getrocknet bzw. gehärtet, dass sie zumindest kontakttrocken ist.

Die mindestens eine Haftvermittlerschicht, die bei dem erfindungsgemäßen Verfahren auf das Trägermaterial aufgebracht wird, lässt sich, wie oben angegeben, insbesondere hinsichtlich ihrer Schichtdicke im Trockenzustand näher spezifizieren. Alternativ oder zusätzlich lässt sich die mindestens eine Haftvermittlerschicht auch hinsichtlich ihres Flächengewichts (Auftragsgewichts) im Trockenzustand, das sich aus der Schichtdicke und der Dichte des auf das Trägermaterial aufgebrachten Haftvermittlers im Trockenzustand errechnen lässt, näher spezifizieren. Bei Trägermaterial aus Folie bzw. dessen mit dem Haftvermittler versehene Oberfläche durch eine Folie definiert wird, liegt das Flächengewicht des Haftvermittlers im Trockenzustand beispielsweise in einem Bereich von ca. 0,3 bis 15 g/m², vorzugsweise in einem Bereich von ca. 1 bis 5 g/m². Bei Trägermaterial aus Papier bzw. dessen mit dem Haftvermittler versehene Oberfläche durch Papier definiert wird, liegt das Flächengewicht des Haftvermittlers im Trockenzustand beispielsweise in einem Bereich von ca. 1 bis 15 g/m², vorzugsweise in einem Bereich von ca. 4 bis 7 g/m².

Eine weitere vorteilhafte Ausgestaltung der Erfindung sieht vor, dass für die Haftvermittlerschicht ein Haftvermittler verwendet wird, der 10 bis 90 Gew.-%, vorzugsweise 40 bis 70 Gew.-% acryliertes Oligomer, 5 bis 30 Gew.-% Reaktivverdünner, 0,5 bis 10 Gew.-% auf UV-Strahlung reagierenden Photoinitiator und optional 0,1 bis 3 Gew.-% eines oder mehrerer Additive aus einer Gruppe umfassend Entschäumer und Substratnetzmittel enthält, wobei sich die Mengen aller in dem Haftvermittler enthaltenen Bestandteile auf 100 Gew.-% addieren. Das acrylierte Oligomer ist dabei vorzugsweise mindestens di- oder trifunktionell, besonders bevorzugt höherfunktionell. Als acryliertes Oligomer wird dabei beispielsweise Polyurethan-Acrylat verwendet. Der Reaktivverdünner reduziert die Viskosität des Haftvermittlers. Eine geringe Viskosität des Haftvermittlers begünstigt bei kleiner Haftvermittler-Auftragsmenge die Ausbildung einer dünnen, vollflächigen Haftvermittlerschicht auf der Substratoberfläche des bahnförmigen Trägermaterials. Die Viskosität des Haftvermittlers wird hierzu vorzugsweise auf ein Minimum reduziert.

Der in dem Haftvermittler optional enthaltene Entschäumer dient der Bekämpfung (Auflösung) von in der flüssigen Haftvermittlerschicht auftretenden Luft- oder Gaseinschlüssen. Solche Einschlüsse, die in Form von Schaumblasen, z. B. Mikro- und Makroschaumblasen auftreten, können in der Haftvermittlerschicht Poren und Krater verursachen, welche eine optimale Haftung zwischen der Substratoberfläche des bahnförmigen Trägermaterials und dem Bindemittel der nachfolgend aufgebrachten UV-härtbaren Lackschicht verhindern und/oder die Oberflächenqualität des Strukturgebers herabsetzen.

Das in dem Haftvermittler optional enthaltene Substratnetzmittel dient der Abstimmung der Grenzflächenenergie zwischen der Substratoberfläche des bahnförmigen Trägermaterials und dem flüssigen Haftvermittler. Beispielsweise wird mit dem Substratnetzmittel die Grenzflächenenergie bzw. Oberflächenspannung auf dem Substrat gesenkt. Hierdurch lässt sich die Benetzung der Substratoberfläche optimieren, sodass eine gleichmäßige und gute Benetzung aller Bereiche der Substratoberfläche und damit eine gut haftende porenfreie Haftvermittlerschicht erzielt werden.

Als UV-härtbarer Reaktivverdünner können in dem Haftvermittler zum Beispiel 1,6-Hexandioldiacrylat (HDDA), Dipropylene-Glykol Diacrylate (DPGDA), TripropylenGlykol Diacrylate (TPGDA), Ethylenglykoldimethacrylat (EGDMA), Triethylenglycol Divinylether (DVE-3) oder Kombinationen/Mischungen dieser Verdünner verwendet werden. Als auf UV-Strahlung reagierender Photoinitiator wird in der Haftvermittlerschicht beispielsweise Monoacylphosphinoxid (MAPO), Bisacylphosphinoxide (BAPO), 2-Hydroxy-2-methylphenylpropanone (HMPP), 1-Hydroxycyclohexylphenylketon (CPK) und/oder Methylbenzoylformat (MBF) verwendet.

Optional kann die Haftvermittlerschicht Aminopropyltriethoxysilan (AMEO) enthalten, beispielsweise mit einem Anteil im Bereich von 3 bis 8 Gew.-%.

Eine andere oder alternative Ausgestaltung der Erfindung sieht vor, dass für die Haftvermittlerschicht ein Haftvermittler verwendet wird, der 10 bis 90 Gew.-%, vorzugsweise 40 bis 70 Gew.-% acrylierte Oligomer-Dispersion und/oder acrylierte Oligomer-Emulsion, 5 bis 30 Gew.-% Reaktivverdünner, 0,5 bis 10 Gew.-% auf UV-Strahlung reagierenden Photoinitiator und optional 0,1 bis 3 Gew.-% eines oder mehrerer Additive aus einer Gruppe umfassend Entschäumer und Substratnetzmittel enthält, wobei sich die Mengen aller in dem Haftvermittler enthaltenen Bestandteile auf 100 Gew.-% addieren. Diese Ausgestaltung ist vorteilhaft, wenn das bahnförmige Trägermaterial, auf welchem die Haftvermittlerschicht und anschließend die UV-härtbare Lackschicht aufgebracht werden, aus Papier besteht oder unter anderem aus Papier gebildet ist, wobei die Haftvermittlerschicht auf das Papier aufgebracht wird. Durch einen Wasseranteil in der acrylierten Oligomer-Dispersion und/oder in der acrylierten Oligomer-Emulsion lässt sich die Verbindung des Haftvermittlers mit dem Papier verbessern.

Nach einer weiteren Ausgestaltung des erfindungsgemäßen Verfahrens enthält der für die UV-härtbare Lackschicht verwendete Lack
30 bis 95 Gew.-% acryliertes Oligomer,
10 bis 70 Gew.-% mono- oder multifunktionales Monomer,
1 bis 5 Gew.-% Photoinitiator, und optional
1 bis 6 Gew.-% eines oder mehrerer Additive aus einer Gruppe umfassend Entschäumer, Substratnetzmittel, Release-Additive, Wachse und Antiabsetzmittel, wobei sich die Mengen aller in dem UV-härtbaren Lack enthaltenen Bestandteile auf 100 Gew.-% addieren. Ein entsprechend zusammengesetzter UV-härtbarer Lack ermöglicht die Einstellung einer hohen Härte der daraus erzeugten Lackschicht bzw. der darauf erzeugten dreidimensionalen Oberflächenstruktur, beispielsweise Prägestruktur.

Es wurde seitens des Erfinders überraschender Weise gefunden, dass sich mit einem derart zusammengesetzten UV-härtbaren Lack ein Verbundmaterial der eingangs genannten Art kostengünstig herstellen lässt, dessen auf der Lackschicht erzeugte dreidimensionale Oberflächenstruktur bzw. Prägestruktur eine hohe Härte sowie Abformgenauigkeit aufweist, sodass sich mittels des erfindungsgemäßen Verbundmaterials, wenn dieses als Strukturgeber verwendet wird, entsprechend große Strukturtiefen ohne merklichen oder erheblichen Tiefenverlust in eine prägefähige Materialoberfläche, insbesondere harzhaltige Laminatoberfläche einpressen lassen.

Nach einer weiteren Ausgestaltung enthält der für die UV-härtbare Lackschicht verwendete Lack 50 bis 95 Gew.-% acryliertes Oligomer und/oder 10 bis 40 Gew.-% mono- oder multifunktionales Monomer und/oder 1 bis 3 Gew.-% Photoinitiator und/oder 1 bis 5 Gew.-% eines oder mehrerer Additive aus einer Gruppe umfassend Entschäumer, Substratnetzmittel, Release-Additive, Wachse und Antiabsetzmittel, wobei sich die Mengen aller in dem UV-härtbare Lack enthaltenen Bestandteile auf 100 Gew.-% addieren. Durch Verwendung eines solchen Lacks lässt sich ein Verbundmaterial der eingangs genannten Art besonders vorteilhaft realisieren. Der relativ hohe Anteil an acryliertem Oligomer ermöglicht in Kombination mit dem mono- oder multifunktionalen Monomer die Einstellung einer hohen Härte der aus dem Lack gebildeten dreidimensionalen Oberflächenstruktur. Durch eine Zugabe eines Release-Additivs lassen sich eine abformgenaue Trennung der in der Lackschicht erzeugten Oberflächenstruktur von einem Prägewerkzeug, z. B. einer Prägewalze oder einem Prägeband, sowie eine abformgenaue Trennung des Verbundmaterials bzw. Strukturgebers von einer damit texturierten Materialoberfläche optimieren. Durch eine Zugabe von Wachs als Additiv können eine nicht optimale Härtung an der Oberfläche der Lackschicht verbunden mit einer dauerhaften Klebrigkeit der Lackschicht unterbunden werden. Eine nicht optimale Härtung sowie eine dauerhafte Klebrigkeit können aus der Wechselwirkung von Luftsauerstoff mit der aufgetragenen Lackschicht resultieren. Durch eine Zugabe eines Antiabsetzmittels wird ein Absetzen eines oder mehrerer bestimmter Komponenten des Lacks verhindert, sodass die Zusammensetzung, insbesondere die Härte der erzeugten Lackschicht bzw. dreidimensionalen Oberflächenstruktur über deren Schichtdicke im Wesentlichen homogen sind. Hinsichtlich der Zugabe eines Entschäumers und/oder Substratnetzmittels zu der Lackzusammensetzung und der daraus resultierenden Wirkungen wird zur Vermeidung von Wiederholungen auf die obigen Ausführungen zu entsprechenden Additiven des Haftvermittlers verwiesen.

Der für die UV-härtbare Lackschicht verwendete Lack enthält vorzugsweise kein Farbpigment. Auch der erfindungsgemäß verwendete Haftvermittler enthält vorzugsweise kein Farbpigment. Hierdurch lässt sich eine hohe Transparenz bei dem erfindungsgemäßen Verbundmaterial erzielen, insbesondere wenn dessen Trägermaterial aus transparentem Papier oder Kunststoff besteht oder gebildet ist.

Eine weitere Ausgestaltung der Erfindung sieht vor, dass der Photoinitiator des UV-härtbaren Lacks so ausgewählt wird, dass dieser Photoinitiator geeignet ist, Licht mit einer Wellenlänge im Bereich von 360 bis 420 nm, vorzugsweise im Bereich von 390 bis 400 nm zu absorbieren. Diese Ausgestaltung der Erfindung ermöglicht eine rasche sowie energieeffiziente Härtung der mit der dreidimensionalen Oberflächenstruktur versehenen Lackschicht, sodass sich das bahnförmige Verbundmaterial mit hoher Fertigungsgeschwindigkeit herstellen lässt. Die Fertigungs- bzw. Bahngeschwindigkeit des Verbundmaterials kann in dem erfindungsgemäßen Herstellungsverfahren beispielsweise im Bereich von 5 bis 15 m/min betragen.

Nach einer weiteren Ausgestaltung des erfindungsgemäßen Verfahrens enthalten der Haftvermittler bzw. die Haftvermittlerschicht und/oder der für die UV-härtbare Lackschicht verwendete Lack Urethanacrylat, Polyesteracrylat, Epoxyacrylat oder eine Mischung aus zwei oder drei dieser Acrylate als acryliertes Oligomer. Diese Acrylate, insbesondere Urethanacrylate, zeichnen sich durch hohe Zähigkeit, gute Haftung und hohe Abriebfestigkeit aus. Das erfindungsgemäß hergestellte Verbundmaterial erhält dadurch entsprechende Zähigkeit- und Festigkeitseigenschaften, die ihm eine hohe Robustheit verleihen, insbesondere bei Verwendung des Verbundmaterials als Beschichtungsmaterial, aber auch für eine Mehrfachverwendung als Strukturgeber. Des Weiteren trägt diese Ausgestaltung bei Verwendung des Verbundmaterials als Strukturgeber zu einer hohen Abformgenauigkeit bzw. Prägegenauigkeit bei der Texturierung der betreffenden Materialoberfläche, z. B. Laminatoberfläche, bei.

Eine weitere vorteilhafte Ausgestaltung des erfindungsgemäßen Verfahrens ist dadurch gekennzeichnet, dass die UV-härtbare Lackschicht mittels mindestens eines UV-Licht emittierenden LED-Strahlers unter Abgabe einer UV-Strahlungsleistung im Bereich von 8 bis 16 W/cm², vorzugsweise im Bereich von 10 bis 14 W/cm² gehärtet wird. Durch diese Ausgestaltung der Erfindung lassen sich Verbundmaterialien der hier genannten Art energieeffizient und mit relativ geringem anlagentechnischen Aufwand kostengünstig herstellen.

Die dreidimensionale Oberflächenstruktur der Lackschicht des erfindungsgemäßen Verbundmaterials kann auf verschiedene Weise erzeugt werden. Eine vorteilhafte Ausgestaltung der Erfindung sieht vor, dass die dreidimensionale Oberflächenstruktur mittels eines mechanischen Prägewerkzeuges, vorzugsweise einer Prägewalze oder eines platten- oder bahnförmigen Strukturgebers, erzeugt wird. Durch diese Ausgestaltung lässt sich auf der Lackschicht eine Vertiefungen aufweisende Oberflächenstruktur erzeugen, wobei die Vertiefungen beispielsweise eine Tiefe größer als 100 µm, insbesondere größer als 200 µm, mitunter sogar größer als 500 µm aufweisen können. Die Obergrenze der Tiefe der Oberflächenstruktur hängt insbesondere von der Schichtdicke der Lackschicht ab. Die Obergrenze der Tiefe der Vertiefungen kann beispielsweise im Bereich von ca. 1 bis 2 mm liegen. Durch derartige Vertiefungen in der Oberflächenstruktur des erfindungsgemäßen Verbundmaterials können beispielsweise Holzporen zur Nachahmung von natürlichem Holz oder Fugen zur Nachahmung eines Dielen- oder Fliesenbodens täuschend ähnlich nachgebildet werden.

Wird in dem erfindungsgemäßen Verfahren eine Prägewalze oder dergleichen zum Formen der dreidimensionalen Oberflächenstruktur verwendet, so wird der aus dem bahnförmigem Trägermaterial, der Haftvermittlerschicht und der Lackschicht gebildete Aufbau bzw. Verbund vorzugsweise mit einem Umschlingungswinkel im Bereich von ca. 60° bis 200°, besonders bevorzugt im Bereich von ca. 100° bis 180° um die Prägewalze geführt.

In einer alternativen oder ergänzenden Ausgestaltung der Erfindung ist vorgesehen, dass die dreidimensionale Oberflächenstruktur durch Bestrahlung mittels einer UV-Strahlungsquelle erzeugt wird, wobei die UV-Strahlungsquelle UV-Licht mit einer Wellenlänge im Bereich von 100 bis 230 nm, bevorzugt im Bereich von 130 bis 190 nm, besonders bevorzugt im Bereich von 170 bis 175 nm, insbesondere bevorzugt von ca. 172 nm, emittiert. Durch diese Bestrahlung erhält die Lackschicht eine sehr feine dreidimensionale Oberflächenstruktur, die einen matten optischen Eindruck vermittelt. Hierzu wird die Lackschicht zunächst mit hoch energetischem Licht bestrahlt, das vorzugsweise eine Wellenlänge im Bereich von 170 bis 175 nm aufweist, wodurch eine sehr dünne Oberflächenschicht des Lackes polymerisiert und dadurch gehärtet wird. Bei dieser Bestrahlung treten in einem obersten Bereich der Lackschicht Schrumpfungen auf, die eine sogenannte Mikrofaltung bewirken. An der Oberfläche der Lackschicht wird somit eine Mikrofaltung erzeugt. Bei der zur Erzeugung der Mikrofaltung verwendeten UV-Strahlungsquelle handelt es sich beispielsweise um einen sogenannten Excimer-Strahler, vorzugsweise Excimer-Laser. Die Höhe bzw. Tiefe der durch die Mikrofaltung erzeugten dreidimensionalen Oberflächenstruktur liegt beispielsweise in einem Bereich von 50 bis 300 nm, insbesondere im Bereich von 80 bis 200 nm. Die Mikrofaltung bewirkt, dass die Lackoberfläche einen geringen Glanzgrad, d.h. einen matten Glanzgrad aufweist.

Eine weitere vorteilhafte Ausgestaltung des erfindungsgemäßen Verfahrens ist dadurch gekennzeichnet, dass als bahnförmiges Trägermaterial ein für energiereiche Strahlung, insbesondere für UV-Licht zumindest teilweise durchlässiges bahnförmiges Trägermaterial aus Papier und/oder Kunststoff verwendet wird. Diese Ausgestaltung ist in fertigungstechnischer Hinsicht vorteilhaft. Sie ermöglicht eine Fertigung des erfindungsgemäßen Verbundmaterials, bei welcher die Bestrahlung zumindest teilweise von der der strukturierten Oberfläche abgewandten Seite des Trägermaterials aus erfolgt. Dementsprechend sieht eine weitere vorteilhafte Ausgestaltung der Erfindung vor, dass ein teilweises Härten der Lackschicht durch Bestrahlung mit energiereicher Strahlung, vorzugsweise UV-Licht während des Erzeugens der dreidimensionalen Oberflächenstruktur in der Weise durchgeführt wird, dass die Bestrahlung zumindest teilweise von der der strukturierten Oberfläche abgewandten Seite des Trägermaterials aus erfolgt.

Das bahnförmige Trägermaterial kann somit mit relativ hoher Fördergeschwindigkeit durch eine Vorrichtung zum Erzeugen der dreidimensionalen Oberflächenstruktur, beispielsweise eine mit einer Prägewalze ausgerüsteten Vorrichtung hindurchbewegt werden, wobei die zunächst fließfähige Lackschicht mittels mindestens eines energiereiche Strahlung, vorzugsweise UV-Licht emittierenden Strahlers an einer günstigen Position innerhalb der Vorrichtung ausreichend schnell während des Formens der Oberflächenstruktur (Prägestruktur) soweit gehärtet werden kann, dass das Trägermaterial zusammen mit der die Oberflächenstruktur aufweisenden Lackschicht sodann von der Prägewalze bzw. einem Prägewerkzeug formstabil abgezogen oder abgetrennt werden kann. Diese Ausgestaltung der Erfindung ist in fertigungstechnischer Hinsicht besonders vorteilhaft.

Das in dem erfindungsgemäßen Verfahren verwendete, für energiereiche Strahlung, insbesondere für UV-Licht, zumindest teilweise durchlässige bahnförmige Trägermaterial kann auch als transparentes bahnförmiges Trägermaterial bezeichnet werden. Unter einem transparenten Trägermaterial wird dabei ein lichtdurchlässiges Trägermaterial verstanden, welches durchsichtig oder durchscheinend sein kann. Durchsichtige Stoffe lassen den überwiegenden Teil des Lichtes hindurch, wobei ein meist geringer Teil des Lichtes absorbiert und gestreut wird. Beispiele für solche durchsichtigen Trägermaterialien sind Folien aus Polyethylenterephthalat (PET), Polycarbonat (PC) oder Polymethylmethacrylat (PMMA). Durchscheinende Stoffe sind dadurch gekennzeichnet, dass zwar Licht durch sie hindurchtritt, aber das Licht im Stoff gestreut wird. Beispiele für durchscheinende Trägermaterialien sind Papiere, insbesondere sogenannte Pergamentpapiere, die je nach Ausführung mehr oder weniger durchscheinend sein können. Das Flächengewicht des transparenten Papiers kann beispielsweise zwischen 80 und 180 g/m² betragen.

Das erfindungsgemäß verwendete bahnförmige Trägermaterial kann beispielsweise eine emittierte UV-Strahlungsdosis im Bereich von 1.500 bis 2.200 mJ/cm² zu 60 bis 80 % hindurchlassen. Die gemessene transmittierende UV-Strahlung liegt dann etwa im Bereich von 900 bis 1.760 mJ/cm², insbesondere im Bereich von 1.300 bis 1.500 mJ/cm².

Eine vorteilhafte Ausgestaltung des erfindungsgemäßen Verfahrens sieht vor, dass die auf das bahnförmige Trägermaterial aufgebrachte Haftvermittlerschicht vor dem Aufbringen der UV-härtbaren Lackschicht vorgetrocknet wird. Dies kann beispielsweise durch Bestrahlung der aufgebrachten Haftvermittlerschicht mittels UV-Strahlung oder in Kombination von UV-Strahlung und thermischer Trocknung erfolgen.

Eine weitere vorteilhafte Ausgestaltung des erfindungsgemäßen Verfahrens ist dadurch gekennzeichnet, dass als bahnförmiges Trägermaterial eine Materialbahn aus Papier verwendet wird, wobei zur Herstellung der Haftvermittlerschicht ein wässriger Haftvermittler auf das Trägermaterial aufgetragen wird, wobei die Haftvermittlerschicht vor dem Aufbringen der UV-härtbaren Lackschicht auf dieselbe zumindest im Oberflächenbereich getrocknet wird, und wobei die Trocknung unter Anwendung von UV-Strahlung und Temperaturen im Bereich von 80° C bis 160° C, vorzugsweise im Bereich von 90° C bis 140° C, besonders bevorzugt im Bereich von 100° C bis 120° C durchgeführt wird.

Der Wasseranteil des wässrigen Haftvermittlers verbessert die Bindung des Haftvermittlers mit den Fasern der Papierbahn. Der Wasseranteil wird sodann durch die Trocknung entfernt oder weitgehend reduziert. Hierdurch lässt sich eine relativ dünne Haftvermittlerschicht erzielen, die eine besonders gute Bindung zwischen der Substratoberfläche des bahnförmigen Trägermaterials (Papiers) und dem Bindemittel der durch UV-Strahlung härtbaren Lackschicht bewirkt.

Eine vorteilhafte Variante des erfindungsgemäßen Verfahrens sieht vor, dass als bahnförmiges Trägermaterial eine Kunststofffolie verwendet wird, wobei die Haftvermittlerschicht vor dem Aufbringen der UV-härtbaren Lackschicht auf die Haftvermittlerschicht mittels energiereicher Strahlung, vorzugsweise UV-Strahlung, insbesondere UV-C-Strahlung, zumindest soweit gehärtet wird, dass die Haftvermittlerschicht an ihrer Oberfläche fest und/oder im Wesentlichen nicht klebend ist, wobei der Photoinitiator der Haftvermittlerschicht geeignet ist, Licht mit einer Wellenlänge im Bereich von 250 bis 350 nm, vorzugsweise im Bereich von 270 bis 330 nm zu absorbieren, und wobei die Haftvermittlerschicht mit einer UV-Strahlungsdosis im Bereich von 60 bis 200 mJ/cm², vorzugsweise 100 bis 160 mJ/cm² gehärtet wird.

Die Verwendung einer Kunststofffolie als bahnförmiges Trägermaterial ist hinsichtlich der Materialkosten und der Robustheit des Trägermaterials und somit des Verbundmaterials, das vorzugsweise als Strukturgeber oder Beschichtungsmaterial verwendet wird, von Vorteil. Die Vorhärtung bzw. Härtung der Haftvermittlerschicht in dem Maße, dass sie an ihrer Oberfläche fest und/oder im Wesentlichen nicht klebend ist, bevor auf sie die UV-härtbare Lackschicht aufgebracht wird, verbessert die Bindung zwischen der Substratoberfläche des Trägermaterials (Kunststofffolie) und dem Bindemittel der durch UV-Strahlung härtbaren Lackschicht. Diese Ausgestaltung hat insbesondere den Vorteil, dass der Haftvermittler direkt an der Grenzfläche seine optimale Wirkung entfaltet und daher in relativ geringer Menge aufgebracht werden kann, um dennoch hohe bzw. ausgezeichnete Haftwerte zu erreichen. Der entsprechend dieser Ausgestaltung eingesetzte Photoinitiator der Haftvermittlerschicht ermöglicht bei der angegebenen UV-Strahlungsdosis eine rasche sowie energieeffiziente Härtung oder zumindest Vorhärtung der Haftvermittlerschicht, sodass sich das erfindungsgemäße Verbundmaterial mit hoher Fertigungsgeschwindigkeit herstellen lässt.

Eine weitere vorteilhafte Ausgestaltung des erfindungsgemäßen Verfahrens ist dadurch gekennzeichnet, dass die UV-härtbare Lackschicht mittels mindestens eines UV-Licht emittierenden LED-Strahlers unter Abgabe einer UV-Strahlungsleistung im Bereich von 8 bis 16 W/cm², vorzugsweise im Bereich von 10 bis 14 W/cm² gehärtet wird. Durch diese Ausgestaltung der Erfindung lassen sich Verbundmaterialien, insbesondere Strukturgeber der hier genannten Art energieeffizient und mit relativ geringem anlagentechnischen Aufwand kostengünstig herstellen.

Eine weitere vorteilhafte Ausgestaltung des erfindungsgemäßen Verfahrens sieht vor, dass die UV-härtbare Lackschicht mittels mindestens eines Quecksilberdampf-Mitteldruckstrahlers oder mindestens eines UV-C-Strahlers endausgehärtet wird, wobei die Endaushärtung vorzugsweise unter Anwendung einer UV-Strahlungsdosis im Bereich von 500 bis 3.000 mJ/cm² durchgeführt wird. Durch diese Ausgestaltung der Erfindung lassen sich Verbundmaterialien, insbesondere Strukturgeber der hier genannten Art mit hoher Fertigungsgeschwindigkeit herstellen. Dabei erfolgt während der Erzeugung der dreidimensionalen Oberflächenstruktur eine teilweise Härtung (Vorhärtung) der auf die Haftvermittlerschicht aufgebrachten UV-härtbaren Lackschicht. Die Lackschicht wird dabei soweit gehärtet (teilgehärtet), dass der Verbund aus bahnförmigem Trägermaterial, Haftvermittler und Lackschicht von einem Prägewerkzeug, vorzugsweise einer Prägewalze, mit hoher Abformgenauigkeit abgezogen werden kann, sodass eine in die Lackschicht eingeformte Oberflächenstruktur im Wesentlichen verlustfrei und formstabil von dem Prägewerkzeug entfernt wird. Während dieses ersten Härtungsschritts können beispielsweise ca. 50 bis 80% der für die vollständige Aushärtung erforderlichen Härtung erfolgen. Anschließend erfolgt die Endaushärtung (Nachhärtung) des von dem Prägewerkzeug entfernten Verbundes mittels mindestens eines Quecksilberdampf-Mitteldruckstrahlers oder mindestens eines UV-C-Strahlers unter Anwendung einer UV-Strahlungsdosis, die vorzugsweise im Bereich von 500 bis 3.000 mJ/cm², beispielsweise im Bereich von 800 bis 2.800 mJ/cm², insbesondere im Bereich von 1.000 bis 2.500 mJ/cm² liegt. Die Härtung (Vorhärtung) der auf die Haftvermittlerschicht aufgebrachten UV-härtbaren Lackschicht kann somit beispielsweise erfolgen, während die Lackschicht in Kontakt mit einem Prägewerkzeug ist, wohingegen die Endaushärtung (Nachhärtung) der Lackschicht erfolgt, wenn die Lackschicht außer Kontakt mit dem Prägewerkzeug ist.

Auch liegt es im Rahmen der Erfindung, dass die zuvor beschriebene Endaushärtung (Nachhärtung) der UV-härtbaren Lackschicht mittels mindestens eines Quecksilberdampf-Mitteldruckstrahlers oder mindestens eines UV-C-Strahlers durchgeführt wird, nachdem die dreidimensionale Oberflächenstruktur der Lackschicht in Form einer Mikrofaltung mittels eines Excimer-UV-Strahlers erzeugt wurde.

Eine weitere vorteilhafte Ausgestaltung des erfindungsgemäßen Verfahrens ist dadurch gekennzeichnet, dass die dreidimensionale Oberflächenstruktur auf der UV-härtbaren Lackschicht in der Weise ausgebildet wird, dass sie nach der Aushärtung der Lackschicht eine gemittelte Rautiefe Rz nach DIN EN ISO 4287 (2009-11) im Bereich von 40 bis 200 µm, vorzugsweise im Bereich von 100 bis 200 µm aufweist. Mit einem entsprechend ausgebildeten Strukturgeber lassen sich in prägefähige Materialoberflächen, insbesondere harzhaltige Laminatoberflächen, dreidimensionale Oberflächenstrukturen erzeugen, die der betreffenden Oberfläche ein Aussehen von Naturmaterial, beispielsweise das Aussehen einer Poren aufweisenden Holzmaserung verleihen.

Die Auftragsmenge und damit das Auftragsgewicht der UV-härtbaren Lackschicht hängt insbesondere von der geforderten bzw. zu erreichenden gemittelten Rautiefe Rz der ausgehärteten Lackschicht ab. Des Weiteren ist es aus wirtschaftlichen Gründen zweckmäßig, die Auftragsmenge und damit das Auftragsgewicht der UV-härtbaren Lackschicht zu begrenzen, um unnötige Materialkosten zu vermeiden. Bei dem erfindungsgemäßen Verfahren liegt das Auftragsgewicht (Auftragsmenge) der UV-härtbaren Lackschicht beispielsweise in einem Bereich von 10 bis 250 g/m², bevorzugt in einem Bereich von 25 bis 200 g/m², besonders bevorzugt in einem Bereich von 30 bis 100 g/m².

Die gemittelte Rautiefe Rz ist der arithmetische Mittelwert aus Einzelrautiefen von fünf aufeinander folgenden Messtrecken in einem Rauheitsprofil. Die gemittelte Rautiefe Rz wird wie folgt ermittelt: Eine definierte Messstrecke auf der Oberfläche des betreffenden Werkstücks bzw. erfindungsgemäßen Verbundmaterials wird in sieben Einzelmessstrecken gegliedert, wobei die mittleren Messstrecken gleich groß sind. Die Bestimmung der Rautiefe Rz erfolgt nur über diese fünf Messstrecken, da der anzuwendende Gauß-Filter eine halbe Messstrecke Vor- bzw. Nachlauf benötigt. Von jeder dieser Einzelmessstrecken des Profils wird die Differenz aus maximalem und minimalem Wert ermittelt. Aus den so erhaltenen fünf Einzelrautiefen wird der Mittelwert gebildet.

Die Messung der Rautiefe Rz erfolgt nach DIN EN ISO 4287 (2009-11) und DIN EN ISO 4288. Das zur Messung der Rautiefe Rz verwendete Messgerät muss der DIN EN ISO 3274 genügen. Der oder die eingesetzten Profilfilter müssen der DIN EN ISO 11562 entsprechen.

Des Weiteren ist Gegenstand der vorliegenden Erfindung ein bahnförmiges Verbundmaterial, vorzugsweise hergestellt nach einem Verfahren gemäß einer der voranstehend angegebenen Ausgestaltungen, mit einem bahnförmigen Trägermaterial aus Papier und/oder Kunststoff und einer auf dem Trägermaterial aufgebrachten Lackschicht aus acryliertem Oligomer, die eine dreidimensionale Oberflächenstruktur aufweist, dadurch gekennzeichnet, dass die Lackschicht über mindestens eine Haftvermittlerschicht aus acryliertem Oligomer, einem Reaktivverdünner und einem auf UV-Strahlung reagierenden Photoinitiator mit dem Trägermaterial verbunden ist, wobei das Verbundmaterial im fertigen Zustand eine mittlere Martenshärte nach DIN EN ISO 14577 -1 (2003-05) im Bereich von 10 bis 80 N/mm², vorzugsweise im Bereich von 30 bis 80 N/mm² aufweist, wobei der zur Messung der Martenshärte als Prüfkörper verwendete Eindringkörper in die strukturierte Oberfläche der Lackschicht gedrückt wurde.

Das erfindungsgemäße Verbundmaterial zeichnet sich durch die voranstehend in Bezug auf das erfindungsgemäße Verfahren zur Herstellung des Verbundmaterials beschriebenen Vorteile aus.

Eine vorteilhafte Ausgestaltung des erfindungsgemäßen Verbundmaterials ist dadurch gekennzeichnet, dass dessen Haftvermittlerschicht 10 bis 90 Gew.-%, vorzugsweise 40 bis 70 Gew.-% acryliertes Oligomer, 5 bis 30 Gew.-% Reaktivverdünner, 0,5 bis 10 Gew.-% auf UV-Strahlung reagierenden Photoinitiator und optional 0,1 bis 3 Gew.-% eines oder mehrerer Additive aus einer Gruppe umfassend Entschäumer und Substratnetzmittel enthält, wobei sich die Mengen aller in der Haftvermittlerschicht enthaltenen Bestandteile auf 100 Gew.-% addieren. Das entsprechend ausgebildete Verbundmaterial zeichnet sich durch eine hohe mechanische und thermische Beständigkeit für seine Verwendung als Strukturgeber oder als Beschichtungsmaterial aus.

Eine weitere vorteilhafte Ausgestaltung des erfindungsgemäßen Verbundmaterials sieht vor, dass für die Haftvermittlerschicht ein Haftvermittler verwendet wird, der 10 bis 90 Gew.-%, vorzugsweise 40 bis 70 Gew.-% acrylierte Oligomer-Dispersion und/oder acrylierte Oligomer-Emulsion, 5 bis 30 Gew.-% Reaktivverdünner, 0,5 bis 10 Gew.-% auf UV-Strahlung reagierenden Photoinitiator und optional 0,1 bis 3 Gew.-% eines oder mehrerer Additive aus einer Gruppe umfassend Entschäumer und Substratnetzmittel enthält, wobei sich die Mengen aller in dem Haftvermittler enthaltenen Bestandteile auf 100 Gew.-% addieren. Das entsprechend ausgebildete Verbundmaterial zeichnet sich ebenfalls durch eine hohe mechanische und thermische Beständigkeit für seine Verwendung als Strukturgeber oder als Beschichtungsmaterial aus.

Gemäß einer weiteren Ausgestaltung des erfindungsgemäßen Verbundmaterials ist dieses dadurch gekennzeichnet, dass seine die Oberflächenstruktur aufweisende Lackschicht nach der Aushärtung eine gemittelte Rautiefe Rz nach DIN EN ISO 4287 (2009-11) im Bereich von 10 bis 200 µm, vorzugsweise im Bereich von 40 bis 200 µm, besonders bevorzugt im Bereich von 100 bis 200 µm aufweist.

Das Auftragsgewicht der UV-härtbaren Lackschicht liegt beispielsweise in einem Bereich von 10 bis 250 g/m², bevorzugt in einem Bereich von 25 bis 200 g/m², besonders bevorzugt in einem Bereich von 30 bis 100 g/m².

Das erfindungsgemäße Verbundmaterial lässt sich, wenn dessen bahnförmiges Trägermaterial eine für energiereiche Strahlung, insbesondere für UV-Strahlung zumindest teilweise durchlässige Kunststofffolienbahn ist, auch vorteilhaft im sogenannten CCI-Verfahren zur Texturierung von prägefähigen Lackoberflächen verwenden. CCI steht für Calander Coating Inert. Mit dem CCI-Verfahren können lackierbare Werkstoffplatten, beispielsweise MDF-, HDF- oder Kunststoffplatten, mit einer hochglänzenden oder matten Lackoberfläche versehen werden. Bei diesem Verfahren wird die Werkstoff-Oberfläche, vorzugsweise Holzwerkstoff-Oberfläche, nach dem Auftrag von UV-Lack in einem Kalander durch eine transparente Folie hindurch mittels UV-Licht getrocknet bzw. gehärtet. Bei dem CCI-Verfahren wird die Werkstoff-Oberfläche vorzugsweise zunächst grundiert und anschließend UV-Lack als Endlack aufgetragen. Die mit flüssigem UV-Lack beschichtete Werkstoffplatte wird direkt in den Kalander gefördert. Dort härtet die Oberfläche unter inerten Bedingungen aus. Anders ausgedrückt, findet eine "gekapselte Trocknung" der lackierten Werkstoffplatte unter einer Folie statt. Als diese Folie kann vorteilhaft das erfindungsgemäße Verbundmaterial verwendet werden, wenn dessen Trägermaterial aus einer für UV-Strahlung zumindest teilweise durchlässigen Kunststofffolienbahn besteht oder gebildet ist. Auf diese Weise lassen sich Werkstoffplatten mit texturierter Lackoberfläche herstellen, die höchsten Qualitätsanforderungen genügen.

Die Erfindung betrifft somit insbesondere die Verwendung des erfindungsgemäßen Verbundmaterials als Strukturgeber zum Texturieren einer prägefähigen Materialoberfläche, beispielsweise in einer Presse zur Herstellung von dekorativem Laminat unter Einwirkung von Wärme und Druck oder in einem Beschichtungsverfahren, bei dem eine Oberfläche eines plattenförmigen Werkstoffs nach Auftrag von UV-Lack in einem Kalander durch eine transparente Folie in Form des Verbundmaterials hindurch mittels UV-Licht getrocknet und/oder gehärtet wird. Ebenso kann das erfindungsgemäße Verbundmaterial dazu verwendet werden ein in einem Schmelzzustand oder plastisch umformbaren Zustand befindliches Material, beispielsweise ein Kantenband zu strukturieren.

Eine weitere vorteilhafte Verwendung des erfindungsgemäßen Verbundmaterials besteht in einer Verwendung als Beschichtungsmaterial für Werkstückoberflächen, vorzugsweise für plattenförmige Werkstücke, insbesondere für Oberflächen von Werkstücken aus Holzwerkstoff, Schichtstoff, Kunststoff und/oder Laminat oder aus Kombinationen von mindestens zwei solcher Werkstoffe.

Im Vergleich zu herkömmlichen Laminaten, die eine verschleißfeste Oberflächenbeschichtung aus Melaminformaldehydharz aufweisen und daher in haptischer Hinsicht häufig als kühl empfunden werden und beim Begehen hörbaren Trittschall verursachen, zeichnet sich das erfindungsgemäße Verbundmaterial mit seiner Lackoberfläche aus acryliertem Oligomer durch eine erheblich angenehmere Haptik und verbesserte Trittschalleigenschaften aus. Paneele aus Holzwerkstoff, die mit dem erfindungsgemäßen Verbundmaterial als Oberflächenbeschichtung versehen sind, fühlen sich angenehm "fußwarm" an.

Nachfolgend wird die Erfindung anhand einer mehrere Ausführungsbeispiele darstellenden Zeichnung näher erläutert. Es zeigen schematisch:
- Fig. 1: ein Verfahren bzw. eine Vorrichtung zur Herstellung eines bahnförmigen Verbundmaterials, das beispielsweise als Strukturgeber zum Texturieren einer prägefähigen Materialoberfläche, insbesondere harzhaltigen Laminatoberfläche, verwendbar ist, in einer Seitenansicht;
- Fig. 2: ein zweites Ausführungsbeispiel eines Verfahrens bzw. einer Vorrichtung zur Herstellung eines bahnförmigen Verbundmaterials, das beispielsweise als Strukturgeber zum Texturieren einer prägefähigen Materialoberfläche, insbesondere harzhaltigen Laminatoberfläche, verwendbar ist, in einer Seitenansicht;
- Fig. 3: ein drittes Ausführungsbeispiel eines Verfahrens bzw. einer Vorrichtung (1') zur Herstellung eines bahnförmigen Verbundmaterials, das beispielsweise als Strukturgeber zum Texturieren einer prägefähigen Materialoberfläche, insbesondere harzhaltigen Laminatoberfläche, verwendbar ist, in einer Seitenansicht;
- Fig. 4: eine Verwendung von erfindungsgemäßem Verbundmaterial als Beschichtungsmaterial für Werkstückoberflächen;
- Fig. 5: ein weiteres Beispiel einer Verwendung von erfindungsgemäßem Verbundmaterial als Beschichtungsmaterial für Werkstückoberflächen, und
- Fig. 6: ein Beispiel einer Verwendung von erfindungsgemäßem Verbundmaterial als Strukturgeber.

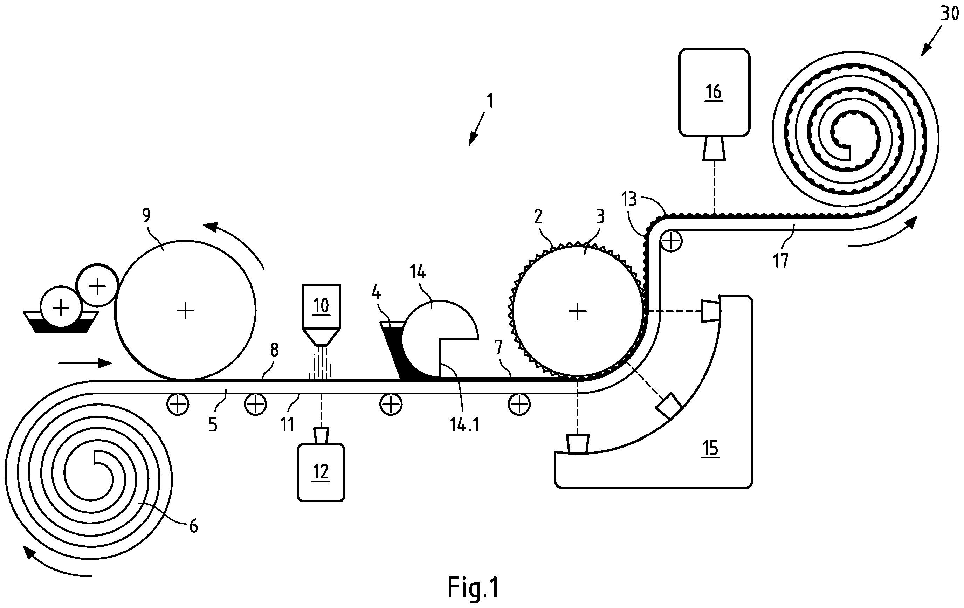

In Fig. 1 ist schematisch eine Vorrichtung 1 dargestellt, die zur Durchführung des erfindungsgemäßen Verfahrens eingesetzt werden kann und an der das erfindungsgemäße Verfahren beispielhaft veranschaulicht ist. Mittels dieser Vorrichtung können dreidimensionale Strukturen 2, insbesondere Nachbildungen von Holzmaserungs-, Naturstein-, Mosaik- und/oder Fliesenmusterstrukturen, von einer entsprechenden Masterstruktur, die beispielsweise in Form einer Prägewalze 3 ausgeführt ist, auf ein mit UV-härtbarem Lack 4 beschichtetes Trägermaterial 5 übertragen werden.

Bei dem Trägermaterial 5 handelt es sich um ein bahnförmiges Trägermaterial aus Papier und/oder Kunststoff, das in dem Ausführungsbeispiel gemäß Fig. 1 für energiereiche Strahlung, insbesondere für UV-Licht zumindest teilweise durchlässig ist. Das Trägermaterial 5 wird als Rolle 6 in aufgewickelter Form bereitgestellt. Beispielsweise wird als Trägermaterial 5 eine für UV-Strahlung durchlässige Folie verwendet, die aus Polyethylenterephthalat (PET), Polyethylen (PE), Polypropylen (PP), Polycarbonat (PC), Polymethylmethacrylat (PMMA), Polyvinylchlorid (PVC) oder einem anderen für UV-Strahlung durchlässigen Kunststoff hergestellt ist. Die Folie kann auch als transparente Folie bezeichnet werden. Die Dicke der Folie liegt beispielsweise im Bereich von 50 bis 200 µm, vorzugsweise im Bereich von 75 bis 125 µm, besonders bevorzugt im Bereich von 100 bis 125 µm. Alternativ wird als bahnförmiges Trägermaterial 5 transparentes, für UV-Strahlung durchlässiges Papier verwendet. Das Flächengewicht des Papiers liegt beispielsweise im Bereich von 80 bis 180 g/m², vorzugsweise im Bereich von 150 bis 170 g/m².

Auf das Trägermaterial 5 wird eine UV-härtbare Lackschicht 7 aus acryliertem Oligomer aufgebracht, in die nachfolgend eine dreidimensionale Oberflächenstruktur eingeformt wird. Die in der Lackschicht 7 erzeugte dreidimensionale Oberflächenstruktur kann auch als dreidimensionale Prägestruktur bezeichnet werden.

Erfindungsgemäß wird auf das Trägermaterial 5 vor dem Aufbringen der UV-härtbaren Lackschicht 7 mindestens eine Haftvermittlerschicht 8 aufgebracht, die acryliertes Oligomer, einen Reaktivverdünner und einen auf UV-Strahlung reagierenden Photoinitiator beinhaltet.

Die Haftvermittlerschicht 8 enthält beispielsweise 10 bis 90 Gew.-%, vorzugsweise 40 bis 70 Gew.-% acryliertes Oligomer, mindestens 8 Gew.-%, vorzugsweise mindestens 20 Gew.-% Reaktivverdünner und 0,5 bis 10 Gew.-%, vorzugsweise 0,5 bis 5 Gew.-% auf UV-Strahlung reagierenden Photoinitiator.

Der für die Haftvermittlerschicht 8 verwendete Haftvermittler bzw. die damit gebildete Haftvermittlerschicht kann nach einer bevorzugten Ausgestaltung folgende Zusammensetzung aufweisen:
60 bis 90 Gew.-% Ebercryl 4265 der Firma Allnex (als acryliertes Oligomer oder vergleichbares Polyurethanacrylat),
10 bis 30 Gew.-% Triethylenglycol Divinylether (z. B. Ashland Rapidure DVE-3 oder vergleichbares Monomer),
5 bis 10 Gew.-% Methylbenzoylformat (MBF oder vergleichbarer auf UV-Strahlung reagierender Photoinitiator) und
0,1 bis 3 Gew.-% eines oder mehrerer Additive aus einer Gruppe umfassend Entschäumer und Substratnetzmittel, wobei sich die Mengen aller in der Haftvermittlerschicht enthaltenen Bestandteile auf 100 Gew.-% addieren.

Der Photoinitiator ist beispielsweise geeignet, Licht mit einer Wellenlänge im Bereich von 250 bis 350 nm, vorzugsweise im Bereich von 270 bis 330 nm zu absorbieren. Der

Haftvermittler wird beispielsweise mittels einer gravierten oder gummierten Auftragswalze 9 auf das bahnförmige Trägermaterial 5 aufgebracht.

Wird als Trägermaterial 5 transparentes, für UV-Strahlung durchlässiges Papier verwendet, so wird der Haftvermittler zur Ausbildung der Haftvermittlerschicht 8 vorzugsweise in wässriger Form auf die Papierbahn aufgebracht und die Haftvermittlerschicht 8 vor dem Aufbringen der UV-härtbaren Lackschicht 7 thermisch getrocknet. Die Trocknung kann beispielsweise mittels einer der Haftvermittlerschicht 8 zugewandten Heizstrahler-Vorrichtung 10 durchgeführt werden. Alternativ oder zusätzlich kann auch auf der der Haftvermittlerschicht 8 abgewandten Seite (Unter- oder Rückseite) 11 der Papierbahn 5 eine thermische Trocknungsvorrichtung, beispielsweise eine Heizstrahler-Vorrichtung (nicht gezeigt) angeordnet sein.

Die Auftragsmenge des wässrigen Haftvermittlers wird so eingestellt, dass die Haftvermittlerschicht 8 im Trockenzustand eine Schichtdicke im Bereich von 0,5 bis 12 µm, vorzugsweise im Bereich von 1 bis 10 µm, besonders bevorzugt im Bereich von 2 bis 5 µm aufweist. Anders ausgedrückt, wird die Auftragsmenge des wässrigen Haftvermittlers auf der Papierbahn beispielsweise so eingestellt, dass die Haftvermittlerschicht 8 im Trockenzustand ein Flächengewicht im Bereich von ca. 1 bis 15 g/m², bevorzugt im Bereich von ca. 4 bis 7 g/m² aufweist. Die Trocknung der Haftvermittlerschicht 8 erfolgt beispielsweise unter Anwendung von Temperaturen im Bereich von 80°C bis 160°C, vorzugsweise im Bereich von 90°C bis 140°C, besonders bevorzugt im Bereich von 100°C bis 120°C.

Wird anstelle einer Papierbahn eine für UV-Strahlung durchlässige Kunststofffolienbahn verwendet, so wird der Haftvermittler zur Ausbildung der Haftvermittlerschicht 8 vorzugsweise in nicht-wässriger Form auf die Kunststofffolienbahn aufgebracht und die Haftvermittlerschicht 8 vor dem Aufbringen der UV-härtbaren Lackschicht 7 mittels UV-Strahlung soweit gehärtet, dass die Haftvermittlerschicht 8 an ihrer Oberfläche fest und/oder im Wesentlichen nicht klebend ist.

Diese zumindest teilweise Härtung der Haftvermittlerschicht 8 kann beispielsweise mittels eines oder mehrerer UV-Strahler 12, vorzugsweise eines oder mehrerer UV-Licht emittierender LED-Strahler durchgeführt werden, die der Haftvermittlerschicht zugewandt sind und/oder auf der abgewandten Seite (Unter- oder Rückseite) 11 der bahnförmigen Kunststofffolie angeordnet sind. Die Haftvermittlerschicht 8 wird beispielsweise mit einer UV-Strahlungsdosis im Bereich von 60 bis 200 mJ/cm², vorzugsweise 100 bis 160 mJ/cm² gehärtet.

Des Weiteren liegt es auch im Rahmen der Erfindung, die zumindest teilweise Härtung der Haftvermittlerschicht 8 durchzuführen, indem eine thermische Trocknung und eine Strahlenhärtung - wie zuvor beschrieben - miteinander kombiniert werden.

Die Auftragsmenge des nicht-wässrigen Haftvermittlers wird so eingestellt, dass die daraus gebildete Haftvermittlerschicht 8 im Trockenzustand eine Schichtdicke im Bereich von 0,5 bis 12 µm, vorzugsweise im Bereich von 1 bis 10 µm, besonders bevorzugt im Bereich von 2 bis 5 µm aufweist. Anders ausgedrückt, wird die Auftragsmenge des nicht-wässrigen Haftvermittlers auf der Kunststofffolienbahn beispielsweise so eingestellt, dass die Haftvermittlerschicht 8 im Trockenzustand ein Flächengewicht im Bereich von ca. 0,3 bis 15 g/m², bevorzugt im Bereich von ca. 1 bis 5 g/m² aufweist.

Nach der zumindest teilweisen Trocknung bzw. zumindest teilweisen Härtung der Haftvermittlerschicht 8 wird auf diese der UV-härtbare Lack aus acryliertem Oligomer für die nachfolgende Erzeugung bzw. Formung einer dreidimensionalen Oberflächenstruktur (Prägestruktur) 13 aufgebracht.

Für die UV-härtbare Lackschicht 7 wird vorzugsweise ein Lack als Strukturlack verwendet, der
30 bis 95 Gew.-% acryliertes Oligomer,
10 bis 70 Gew.-% mono- oder multifunktionales Monomer,
1 bis 5 Gew.-% Photoinitiator, und optional
1 bis 6 Gew.-% eines oder mehrerer Additive aus einer Gruppe umfassend Entschäumer, Substratnetzmittel, Release-Additive, Wachse und Antiabsetzmittel enthält, wobei sich die Mengen aller in dem UV-härtbaren Lack enthaltenen Bestandteile auf 100 Gew.-% addieren. Der Photoinitiator des UV-härtbaren Lacks ist geeignet, Licht mit einer Wellenlänge im Bereich von 360 bis 420 nm, vorzugsweise im Bereich von 390 bis 400 nm zu absorbieren.

Der Auftrag des UV-härtbaren Lacks kann mittels einer Walzenauftrags- oder Rakelauftragsvorrichtung, vorzugsweise einer Commabar-Auftragsvorrichtung 14 erfolgen. Die Commabar-Auftragsvorrichtung 14 weist ein spezielles Rakelmesser auf, welches aus einer Walze gebildet ist, in die eine Aussparung 14.1 von ca. 90° eingearbeitet wurde. Diese Aussparung 14.1 lässt das profilstangenförmige Messer in der Seitenansicht (Querschnittansicht) wie ein Komma aussehen. Die Einstellung des Commabars bzw. der durch den Commabar und den zugehörigen Lackkasten begrenzten Austrittsöffnung kann durch Änderung in horizontaler und vertikaler Position als auch durch Änderung der Drehwinkeleinstellung erfolgen. Aufgrund der Rundung in der Messergeometrie sind die auf den UV-härtbaren Lack wirkenden Scherkräfte geringer als bei herkömmlichen Rakelmessern. Das Commabarsystem ist vorteilhaft beim Auftrag von dilatanten, viskoelastischen UV-Lacken. Die mögliche Variation von Auftragsgewicht und Viskosität ist beim Commabarsystem besonders groß.

Die UV-härtbare Lackschicht wird im fließfähigen Zustand und daher mit relativ geringem Druck mit der Prägewalze 3 oder einer anderen Masterstruktur in Kontakt gebracht, sodass der UV-härtbare Lack in die Vertiefungen der Mantelfläche der Prägewalze 3 gelangt. Der aus dem Trägermaterial 5, der Haftvermittlerschicht 8 und der Lackschicht 7 gebildete Verbund wird dabei mit einem deutlich ausgebildeten Umschlingungswinkel um die Prägewalze (Masterstruktur) 3 geführt (vgl. Fig. 1). Der Umschlingungswinkel kann beispielsweise im Bereich von 60° bis 200°, vorzugsweise im Bereich von 100° bis 180° liegen.

Die Lackschicht 7 wird während sie in Kontakt mit der Prägewalze (Masterstruktur) 3 ist, d.h. während des Formens der Oberflächenstruktur 13, durch Bestrahlung mit energiereicher Strahlung, vorzugsweise UV-Licht, gehärtet, wobei die Bestrahlung vorzugsweise von der der Oberflächenstruktur 13 abgewandten Seite des strahlungsdurchlässigen, bahnförmigen Trägermaterials 5 aus erfolgt. Die hierzu verwendete Bestrahlungsvorrichtung ist in Fig. 1 mit 15 bezeichnet. Ergänzend zu der Bestrahlung im Bereich der Prägewalze 3 von unten kann die Bestrahlung der Lackschicht im Bereich der Prägewalze 3 auch von mindestens einer der Seiten der Prägewalze 3 aus erfolgen.

Als Bestrahlungsvorrichtung 15 wird vorzugsweise mindestens ein UV-Licht emittierender LED-Strahler verwendet. Die Bestrahlungsvorrichtung 15 härtet die Lackschicht 7 unter Abgabe einer UV-Strahlungsleistung im Bereich von 8 bis 16 W/cm², vorzugsweise im Bereich von 10 bis 14 W/cm², beispielsweise von ca. 12 W/cm².

Die Lackschicht 7 wird in Kontakt mit der Prägewalze (Masterstruktur) 3 soweit gehärtet (teilgehärtet), dass der Verbund aus bahnförmigem Trägermaterial 5, Haftvermittlerschicht 8 und Lackschicht 7 mit hoher Abformgenauigkeit von der Prägewalze 3 abgezogen werden kann. Insbesondere kann die in die Lackschicht eingeformte Oberflächenstruktur 13 nach dieser Härtung im Wesentlichen ohne Tiefenverlust und formstabil von der Prägewalze 3 entfernt werden. Anschließend wird eine Nachhärtung (Endaushärtung) der Lackschicht 7 sowie der darunter liegenden Haftvermittlerschicht 8 mittels mindestens eines Quecksilberdampf-Mitteldruckstrahlers 16 oder mindestens eines UV-C-Strahlers durchgeführt, wobei diese Nachhärtung bzw. Endaushärtung vorzugsweise unter Anwendung einer UV-Strahlungsdosis im Bereich von 500 bis 3.000 mJ/cm² durchgeführt wird. Die Nachhärtung bzw. Endaushärtung des Strukturgebers 17 erfolgt beispielsweise mit einer flächenspezifischen Leistung von ca. 200 W/cm².

Die Oberflächenstruktur (Prägestruktur) 13 des so hergestellten Strukturgebers 17 weist nach dieser abschließenden Nachhärtung (Endaushärtung) eine gemittelte Rautiefe Rz nach DIN EN ISO 4287 im Bereich von 10 bis 200 µm, vorzugsweise im Bereich von 40 bis 200 µm, besonders bevorzugt im Bereich von 100 bis 200 µm auf.

Am Ende der Vorrichtung 1 zur Durchführung des erfindungsgemäßen Herstellungsverfahrens wird der fertige Strukturgeber 17 aufgewickelt.

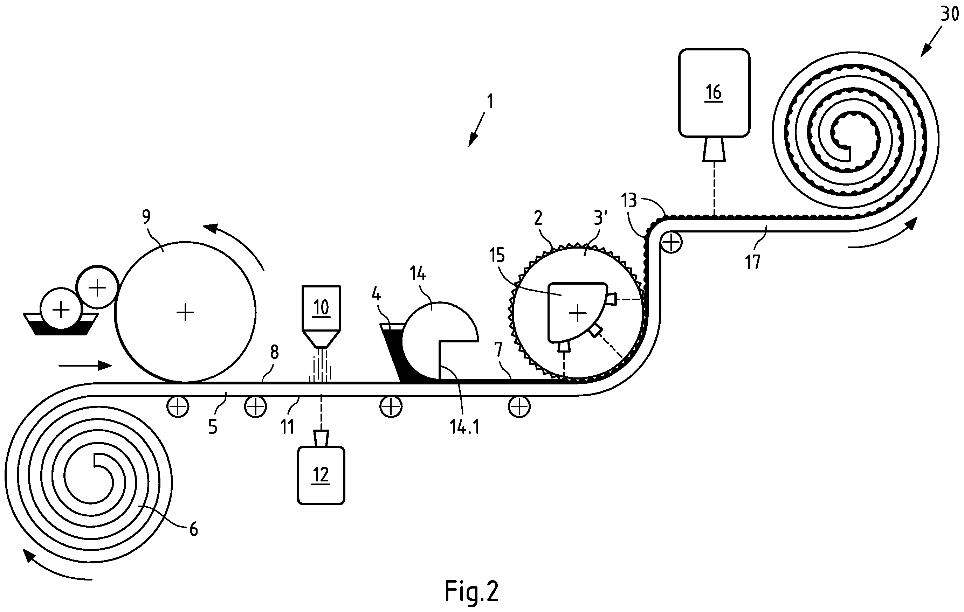

Das in Fig. 2 skizzierte Ausführungsbeispiel unterscheidet sich von dem in Fig. 1 offenbarten Beispiel dadurch, dass die Prägewalze 3' als Hohlwalze einen strahlungsdurchlässigen bzw. transparenten Walzenmantel aufweist, wobei innerhalb der Prägewalze 3' mindestens eine Bestrahlungsvorrichtung 15 angeordnet und auf den Kontaktbereich gerichtet ist, in welchem die UV-härtbare Lackschicht 7 die Prägewalze 3' kontaktiert. Das bahnförmige Trägermaterial 5 kann wiederum für energiereiche Strahlung, insbesondere für UV-Licht zumindest teilweise durchlässig sein. Bei dem in Fig. 2 skizzierten Ausführungsbeispiel ist es allerdings auch möglich, bahnförmiges Trägermaterial 5 zu verwenden, welches für UV-Licht undurchlässig oder im Wesentlichen undurchlässig ist.

Nachfolgend sind weitere Beispiele für Zusammensetzungen des in dem erfindungsgemäßen Verfahren bzw. entsprechenden Versuchen verwendeten Haftvermittlers sowie des strahlenhärtbaren Lackes (Decklackes) zur Formung der Oberflächenstruktur (Prägestruktur) 13 des Strukturgebers 17 und Vergleichsbeispiele angegeben. Insbesondere sind dazu auch in Laborversuchen gemessene Mittelwerte für die Martenshärte und Messwerte für die Rautiefe Rz für bestimmte bahnförmige Trägermaterialien angegeben. Des Weiteren sind Messergebnisse der Gitterschnittprüfung angegeben.

In Versuchen zu dem erfindungsgemäßen Verfahren verwendete Haftvermittler:

| Interne Bezeichnung | Zusammensetzung |
|---|---|
| V1 | 50 Gew.-% PU-Acrylat (difunktionell), 30 Gew.-% HDDA, 15 Gew.-% EGDMA und 5 Gew.-% MBF; |
| V2 | 37,5 Gew.-% PU-Acrylat (6-funktionell), 50 Gew.-% DPGDA, 10 Gew.-% HDDA und 2,5 Gew.-% MBF; |
| V2B | 20 Gew.-% PU-Acrylat (6-funktionell), 72,5 Gew.-% HDDA, 5 Gew.-% AMEO und 2,5 Gew.-% MBF. |

In Versuchen zu dem erfindungsgemäßen Verfahren verwendete strahlenhärtbare Decklacke:

| Interne Bezeichnung | Zusammensetzung |
|---|---|
| Decklack A | 76 Gew.-% Urethanacrylat, aliphatisch, 2 bis 3-funktionell, 18 Gew.-% Monomere, mono- oder difunktionell, 4 Gew.-% Additive (Entschäumer, Substratnetzmittel, Release-Additiv, Wachs, Antiabsetzmittel), 2 Gew.-% Photoinitiator (z. B. MAPO, BAPO, HMPP, CPK, MBF); |
| Decklack B | 48 Gew.-% Urethanacrylat, aromatisch, 3 bis 5-funktionell, 46 Gew.-% Monomere, difunktionell, 4 Gew.-% Additive (Entschäumer, Substratnetzmittel, Release-Additiv, Wachs, Antiabsetzmittel), 2 Gew.-% Photoinitiator (z. B. MAPO, BAPO, HMPP, CPK, MBF); |
| Decklack C | 94 Gew.-% Urethanacrylat, aliphatisch, 5 bis 6-funktionell, 4 Gew.-% Additive (Entschäumer, Substratnetzmittel, Release-Additiv, Wachs, Antiabsetzmittel), 2 Gew.-% Photoinitiator (z. B. MAPO, BAPO, HMPP, CPK, MBF). |

Martenshärte erfindungsgemäß hergestellter Strukturgeber und Vergleichsmaterialien:

| Beispiel Nr. | Träger-material | Dicke des Trägermaterials | | Haftvermittler/ Decklack | Martenshärte Mittelwert | |
|---|---|---|---|---|---|---|
| 1 | PET Folie Hostaphan | | 75 µm | ohne (unlackiert) | | 39,8 |
| 2 | PET Folie Hostaphan | | 75 µm | V1 / A | | 43,5 |
| 3 | PET Folie Hostaphan | | 75 µm | V1 / B | | 12,5 |
| 4 | PET Folie Hostaphan | | 75 µm | V1 / C | | 74,2 |
| 5 | PET Folie Hostaphan | | 75 µm | V2B / A | | 29 |
| 6 | PET Folie Hostaphan | | 75 µm | V2B / B | | 10,7 |
| 7 | PET Folie Hostaphan | | 75 µm | V2B / C | | 44,6 |
| 8 | Papier | | 180 µm | ohne (unlackiert) | | 25,8 |
| 9 | Papier | | 180 µm | wässrig. Primer / A | | 44,7 |
| 10 | ohne (Decklack von Folie ohne Primer abgezogen) | | --- | Decklack C | | 44,3 |

Die Martenshärte wurde bei den vorgenannten Beispielen 1 bis 10 mit einem Messgerät FISCHERSCOPE HM2000S der Firma Helmut Fischer gemäß DIN EN ISO 14577 -1 (2003-05) gemessen, wobei der angewendete Prüfbereich 300 mN / 20 s betrug. Um zu veranschaulichen, welchen Einfluss das Trägermaterial 5 auf die gemessene Oberflächenhärte des Strukturgebers 17 hat, wurde die Martenshärte des Trägermaterials (PET Folie Hostaphan^{®} der Firma Mitsubishi bzw. Papier) auch für sich genommen, d.h. ohne Haftvermittler und ohne Decklack, gemessen (vgl. Beispiele 1 und 8). Zudem wurde zum Vergleich die Martenshärte eines strahlenhärtbaren Lacks für sich genommen gemessen, indem der Lack (nämlich Decklack C) von einer Folie, auf welcher der Lack zuvor ohne Primer (Haftvermittler) aufgebracht wurde, abgezogen und dann separat gemessen wurde (vgl. Beispiel 10).

Gitterschnittprüfungen zur Bestimmung der Haftung der Lackbeschichtung der Strukturgeber 17 gemäß den voranstehend angegebenen Beispielen 2, 3, 4 und 6 ergaben jeweils einen Kennwert Gt von 0. Das heißt, bei diesen Beispielen konnten keine Abplatzungen und somit keine nennenswerte Schädigung (Enthaftung) der jeweiligen Lackbeschichtung des Strukturgebers 17 festgestellt werden. Bei den Beispielen 5 und 7 ergaben die Gitterschnittprüfungen Kennwerte Gt von 2 bzw. 1. Allerdings sind auch diese Gt-Werte gute Kennwerte, da üblicherweise ein mittlerer Kennwert Gt von mindestens 3,5 noch als ausreichender Haftungswert eingestuft wird.

Vergleichsversuche, bei denen die UV-härtbare Lackschicht aus dem oben angegebenen Decklack A, B bzw. C direkt auf eine Kunststofffolie (75 µm PET-Folie Hostaphan^{®} der Firma Mitsubishi) aufgebracht wurde, d.h. ohne Verwendung eines der oben angegebenen Haftvermittler V1, V2 oder V2B, haben bei der Gitterschnittprüfung jeweils eine sehr hohe Enthaftung (Gt-Wert 5) ergeben.

Zur Beurteilung der Abformgenauigkeit der Oberflächenstruktur (Prägestruktur) 13 erfindungsgemäß hergestellter Strukturgeber 17 wurde deren mittlere Rautiefe Rz nach DIN EN ISO 4287 (2009-11) gemessen und mit der mittleren Rautiefe Rz der jeweiligen verwendeten Prägewalze 3 verglichen. Eine dieser Prägewalzen weist eine nachgebildete Holzstruktur als Masterstruktur auf, während eine andere Prägewalze eine Vielzahl negativer Pyramiden als Masterstruktur aufweist.

| Masterstruktur bzw. Strukturgeber | Lackmenge | Gemessene mittlere Rautiefe Rz |
|---|---|---|
| Prägewalze mit Holzstruktur als Masterstruktur mit einer nominellen Strukturtiefe von 45 µm | | |
| Lackierte PET Folie Hostphan | 100 g/m² | 40,360 µm |
| Lackiertes Pergamentpapier | 100 g/m² | 40,176 µm |

| Prägewalze mit negativen Pyramiden als Masterstruktur mit nominellen Strukturtiefe von einer 150 µm | | |
|---|---|---|
| Lackierte PET Folie Hostphan | 90 g/m² | 161,443 µm |
| Lackiertes Pergamentpapier | 90 g/m² | 162,237 µm |

Anhand der voranstehend genannten Messwerte der mittleren Rautiefe Rz lässt sich erkennen, dass die Abformgenauigkeit der Oberflächenstruktur (Prägestruktur) bei erfindungsgemäß hergestellten Strukturgebern hervorragend ist. Es konnte zudem mittels Mikroskopaufnahmen festgestellt werden, dass durch das erfindungsgemäße Verfahren eine originalgetreue Abformung der Masterstruktur der Prägewalze 3 in die Prägestruktur 13 des strahlengehärteten Decklacks des Strukturgebers 17 erhalten wird.

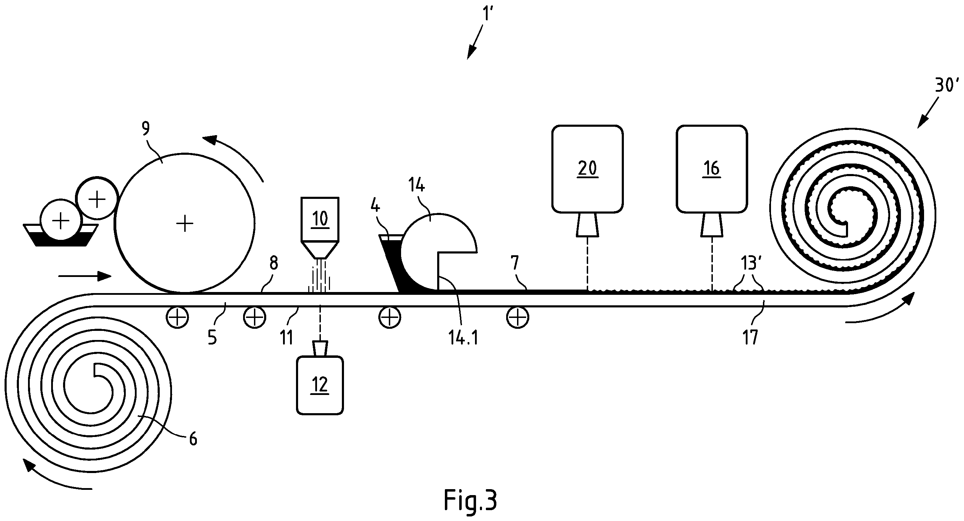

Das in Fig. 3 skizzierte Ausführungsbeispiel unterscheidet sich von den in den Figuren 1 und 2 offenbarten Beispielen dadurch, dass zum Erzeugen einer dreidimensionalen Oberflächenstruktur 13' in der auf das bahnförmige Trägermaterial aufgebrachten Lackschicht 7 nicht ein mechanisches Prägewerkzeug wie etwa eine Prägewalze verwendet sind, sondern dass in diesem Ausführungsbeispiel in der Oberfläche der Lackschicht 7 eine dreidimensionale Oberflächenstruktur 13' durch Bestrahlung mittels einer UV-Strahlungsquelle 20 erzeugt wird, die hochenergetisches, sehr kurzwelliges UV-Licht mit einer Wellenlänge im Bereich von 100 bis 230 nm, bevorzugt im Bereich von 130 bis 190 nm, besonders bevorzugt im Bereich von 170 bis 175 nm, insbesondere bevorzugt von 172 nm, emittiert. Bei der UV-Strahlungsquelle 20 handelt es sich beispielsweise um eine Excimerlaservorrichtung, vorzugsweise eine Xenon-Excimerlaservorrichtung.

Die Excimerlaserbehandlung bewirkt, dass eine sehr dünne Oberflächenschicht des Lackes zumindest teilweise polymerisiert und dadurch verfestigt bzw. gehärtet wird. Das von der UV-Strahlungsquelle (Excimerlaservorrichtung) 20 emittierte hoch energetische Licht dringt nur bis zu einer Schichttiefe von ca. 50 bis 300 nm, beispielsweise ca. 120 nm in die Lackschicht 7 ein und löst ein Aushärten des Lackes aus. Dabei kommt es zu einer Schrumpfung der sehr dünnen Oberflächenschicht des Lackes, die zu einer sogenannten Mikrofaltung der Lackoberfläche führt.

Auf die Excimerlaserbehandlung folgt eine Nachhärtung (Endaushärtung) der Lackschicht 7 und der darunter liegenden Haftvermittlerschicht 8 mittels mindestens eines Quecksilberdampf-Mitteldruckstrahlers 16 oder mindestens eines UV-C-Strahlers. Diese Nachhärtung bzw. Endaushärtung entspricht derjenigen, die oben mit Bezug auf das in Fig. 1 skizzierte Ausführungsbeispiel beschrieben ist.

Das gemäß dem in Fig. 3 skizzierten Ausführungsbeispiel hergestellte bahnförmige Verbundmaterial weist aufgrund der Mikrofaltung der Lackoberfläche eine mattierte Oberfläche auf. Die Oberfläche des so behandelten Verbundmaterial weist dementsprechend einen geringen Glanzgrad auf. Die Mikrofaltung der Lackoberfläche bewirkt insbesondere, dass Fingerabdrücke, die von einer manuellen Berührung der ausgehärteten Lackschicht 7 herrühren, auf der Lackoberfläche des Verbundmaterials kaum sichtbar sind.

Die vorteilhaften Eigenschaften des erfindungsgemäßen Verbundmaterials kommen insbesondere zur Geltung, wenn dieses als Strukturgeber zum Texturieren einer prägefähigen Materialoberfläche verwendet wird. Das erfindungsgemäße Verbundmaterial bzw. ein entsprechender Strukturgeber lässt sich beispielsweise in einer Presse zur Herstellung von dekorativem Laminat unter Einwirkung von Wärme und Druck verwenden. Des Weiteren lässt sich das erfindungsgemäße Verbundmaterial auch vorteilhaft in einem Beschichtungsverfahren verwenden, bei dem eine Oberfläche eines plattenförmigen Werkstoffs nach Auftrag von UV-Lack in einem Kalander durch eine transparente Folie in Form des erfindungsgemäßen Verbundmaterials hindurch mittels UV-Licht getrocknet und/oder gehärtet wird. Bei einem solchen Beschichtungsverfahren kann es sich insbesondere um das oben erwähnte CCI-Verfahren handeln.

Eine alternative Verwendung, bei der die vorteilhaften Eigenschaften des erfindungsgemäßen Verbundmaterials ebenfalls zur Geltung kommen, besteht in seiner Verwendung als Beschichtungsmaterial für Werkstückoberflächen, beispielsweise für plattenförmige Werkstücke, insbesondere für Oberflächen von Werkstücken aus Holzwerkstoff, Schichtstoff, Kunststoff und/oder Laminat oder aus einer Kombination von mindestens zwei solcher Werkstoffe.

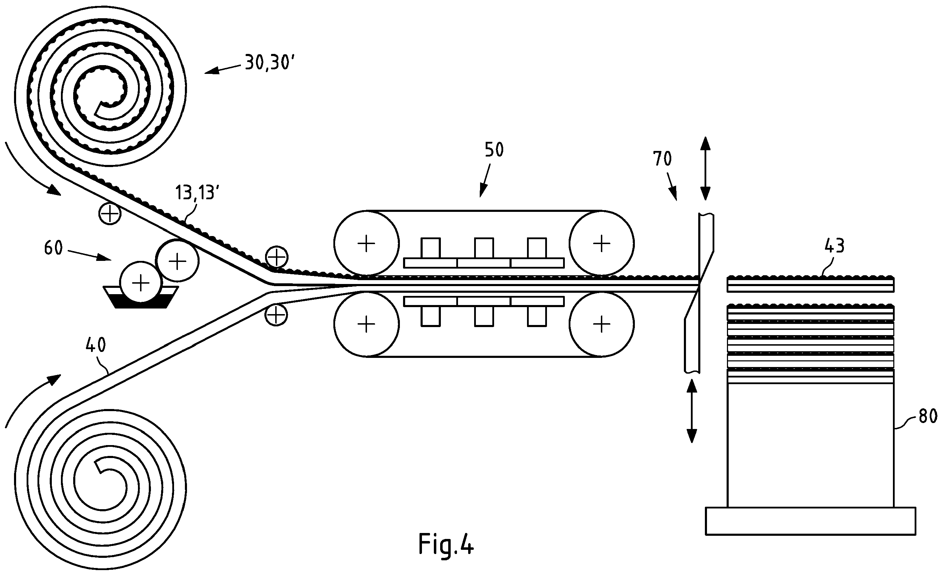

In Fig. 4 ist ein Ausführungsbeispiel einer Verwendung skizziert, bei welcher ein bahnförmiges Verbundmaterial 30, 30', das beispielsweise gemäß einem Verfahren, wie es in einer der Figuren 1 bis 3, hergestellt wurde, als Beschichtungsmaterial für eine Werkstückoberfläche verwendet wird. Das zu einer Rolle aufgewickelte bahnförmige Verbundmaterial 30, 30' wird von der Rolle abgewickelt und zum Beschichten (Kaschieren) eines platten- oder bahnförmigen Werkstücks 40 zusammen mit diesem einer kontinuierlich arbeitenden Bandpresse 50, beispielsweise Doppelbandpresse zugeführt. Zuvor wird auf die der dreidimensionalen Oberflächenstruktur 13, 13' abgewandte Seite, z. B. Unterseite, des Verbundmaterials 30, 30' und/oder auf die mit dem Verbundmaterial zu verbindende Seite des platten- oder bahnförmigen Werkstücks 40 Bindemittel, z. B. Klebstoff oder dergleichen aufgebracht. Dies erfolgt beispielsweise mittels eines Auftragswalzenwerks 60. In der Bandpresse 50 wird die betreffende Oberfläche des Werkstücks 40 mit dem Verbundmaterial 30, 30' unter Einwirkung von Druck und gegebenenfalls Wärme beschichtet. Die dreidimensionale Oberflächenstruktur 13, 13' des Verbundmaterials 30, 30' definiert im fertigen Zustand des beschichteten Werkstücks 40 dessen sichtbare Oberfläche. Anschließend wird das kontinuierlich beschichtete Werkstück 40 mittels einer Schneidvorrichtung 70 abgelängt. Die erhaltenen Zuschnitte 43 können auf einer Zwischenlagereinrichtung 80 gesammelt werden.

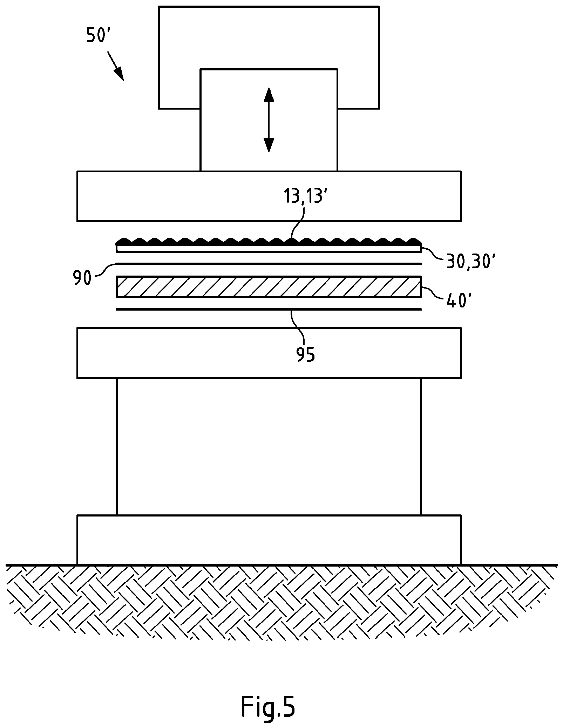

In Fig. 5 ist ein Ausführungsbeispiel einer Verwendung skizziert, bei der ein erfindungsgemäßes Verbundmaterial 30, 30', das beispielsweise gemäß einem Verfahren, wie es in einer der Figuren 1 bis 3, hergestellt und in ein gewünschtes Format zugeschnitten wurde, als Beschichtungsmaterial für ein plattenförmiges Werkstück (Substrat) 40' verwendet wird. Bei dem Werkstück 40' kann es sich z. B. um eine Holzwerkstoff- oder Schichtstoffplatte handeln. Zwischen dem Werkstück 40' und dem zugeschnittenen Verbundmaterial 30, 30', das im fertigen Zustand vorzugsweise transparent ist, kann ein harzimprägniertes Dekorpapier 90 angeordnet werden. Die dem Verbundmaterial 30, 30' abgewandte Seite des plattenförmigen Werkstücks 40' wird vorzugsweise mit einem Gegenzugmaterial 95 beschichtet. Der so gebildete Materialstapel wird in einer Presse 50', z. B. einer Taktpresse durch Einwirkung von Druck und Wärme zu einem Laminat, beispielsweise Hochdrucklaminat verpresst. Die dreidimensionale Oberflächenstruktur 13, 13' befindet sich bei dem fertigen Laminat an der Außen- bzw. Oberseite.

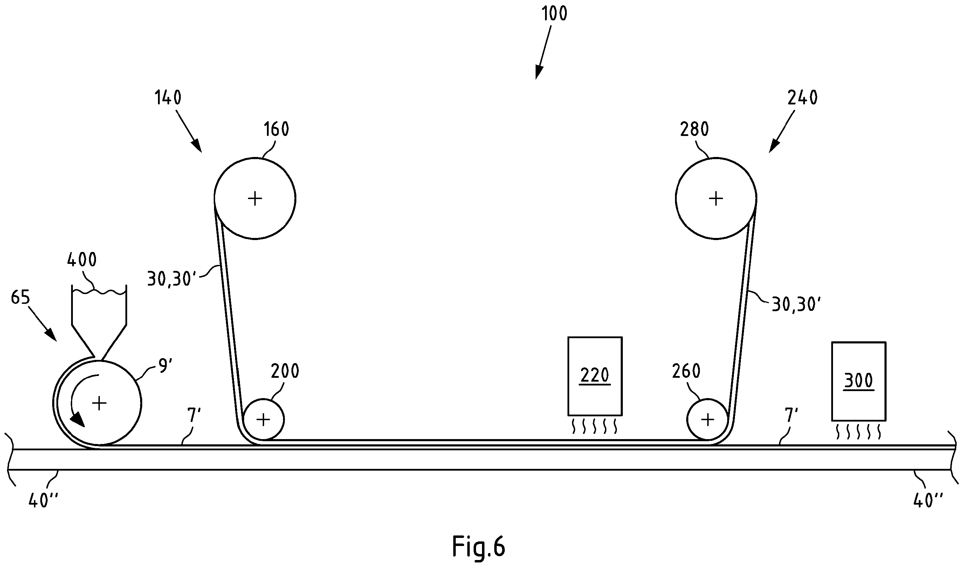

Fig. 6 zeigt ein Ausführungsbeispiel einer Vorrichtung 100 zur Herstellung einer strukturierten Oberfläche eines plattenförmigen Materials 40", das beispielsweise als Holzwerkstoffplatte ausgebildet ist und in der Fig. 6 von links nach rechts zugeführt wird. Das Material 40" kann eine längliche Form aufweisen, um nachfolgend in kleinere Einheiten aufgeteilt zu werden. Daneben ist es möglich, dass die Holzwerkstoffplatte bereits ihre endgültige Form aufweist und nach dem Herstellen einer strukturierten Oberfläche auf der Platte nicht weiter aufgeteilt wird.

Mit einer Lackiervorrichtung 65, die ein Reservoir 400 für einen Lack 4 und eine Dosierwalze 9' aufweist, wird eine Lackschicht 7' auf die Holzwerkstoffplatte 40" aufgebracht. Gegebenenfalls können noch eine oder mehrere Rakeleinrichtungen für eine Vergleichmäßigung der noch flüssigen Lackschicht 7' oder eine oder mehrere andere übliche Einrichtungen vorgesehen sein.

Eine Zuführeinrichtung 140 mit einer Vorratsrolle 160 ist für ein Zuführen eines erfindungsgemäßen bahnförmigen, zumindest teilweise für Strahlung durchlässigen Verbundmaterials 30, 30' vorgesehen (vgl. Figuren 1 bis 3). Im Bereich einer Umlenkrolle 200 wird das bahnförmige Verbundmaterial 30, 30' auf die Lackschicht 7' aufgelegt.

Mit einer ersten Härtungseinrichtung 220, die oberhalb des bahnförmigen Verbundmaterials 30, 30' in einem Bereich angeordnet ist, in welchem das Verbundmaterial 30, 30' mit der Lackschicht 7' in Kontakt steht, wird ein erster Härtungsschritt durchgeführt. Dazu wird Strahlung, beispielsweise UV-Strahlung, durch das Verbundmaterial 30, 30' hindurch auf die Lackschicht 7' aufgebracht. Dabei wird die Struktur des Verbundmaterials 30, 30' auf die Oberfläche der Lackschicht 7' übertragen.

In Transportrichtung weiter rechts in Fig. 6 nach der ersten Härtungseinrichtung 220 ist eine Abhebeeinrichtung 240 mit einer Umlenkrolle 260 und einer Aufwickelrolle 280 vorgesehen, mit der das bahnförmige Verbundmaterial 30, 30' von der Lackschicht 7' abgehoben wird. Danach ist auf der nur teilweise ausgehärteten Lackschicht 7' eine der Struktur der Lackschicht auf dem Verbundmaterial entsprechende Oberflächenstruktur vorhanden.

Schließlich ist eine zweite Härtungseinrichtung 300 vorgesehen, die für die Durchführung eines zweiten Härtungsschritts ausgebildet ist und Strahlung, insbesondere UV-Strahlung, aussendet.

Für die erste Härtungseinrichtung 220 und die zweite Härtungseinrichtung 300 kann beispielsweise eine UV-Lampe eingesetzt werden.

Die Ausführung der Erfindung ist nicht auf die in der schematischen Zeichnung dargestellten Ausführungsbeispiele beschränkt. Vielmehr sind zahlreiche Varianten denkbar, die auch bei von den Beispielen abweichender Gestaltung von der in den Ansprüchen offenbarten Erfindung Gebrauch machen. Beispielsweise kann die thermische Trocknung oder die Härtung der Haftvermittlerschicht 8 vor dem Aufbringen der UV-härtbaren Lackschicht 7 nur von einer Seite, beispielsweise von der Oberseite der Haftvermittlerschicht 8 aus durchgeführt werden. Des Weiteren können der Prägewalze 3 mehrere Bestrahlungsvorrichtungen, vorzugsweise UV-Licht emittierende LED-Strahler zugeordnet sein, die zur Härtung der Lackschicht 7 sowohl außerhalb als auch innerhalb der einen transparent ausgebildeten Walzenmantel aufweisenden Prägewalze 3 angeordnet sind.

## Patentansprüche

1. Verfahren zur Herstellung eines bahnförmigen, eine strukturierte Oberfläche aufweisenden Verbundmaterials (30, 30'), umfassend die Schritte:
Bereitstellen eines bahnförmigen Trägermaterials (5) aus Papier und/oder Kunststoff,
Aufbringen einer UV-härtbaren Lackschicht (7) aus acryliertem Oligomer auf das Trägermaterial (5),
Erzeugen einer dreidimensionalen Oberflächenstruktur (13, 13') in der auf das Trägermaterial (5) aufgebrachten Lackschicht (7) und
zumindest teilweises Härten der Lackschicht (7) durch Bestrahlung mit energiereicher Strahlung, vorzugsweise UV-Licht,
**dadurch gekennzeichnet, dass** vor dem Aufbringen der UV-härtbaren Lackschicht (7) mindestens eine Haftvermittlerschicht (8) enthaltend acryliertes Oligomer, einen Reaktivverdünner und einen auf energiereiche Strahlung,
vorzugsweise UV-Strahlung reagierenden Photoinitiator auf das Trägermaterial (5) aufgebracht wird, und dass die die dreidimensionale Oberflächenstruktur (13, 13') aufweisende Lackschicht (7) soweit gehärtet wird, dass das Verbundmaterial (30, 30') im fertigen Zustand eine mittlere Martenshärte nach DIN EN ISO 14577-1 (2003-05) im Bereich von 10 bis 80 N/mm², vorzugsweise im Bereich von 30 bis 80 N/mm² aufweist, wobei der zur Messung der Martenshärte als Prüfkörper verwendete Eindringkörper in die strukturierte Oberfläche der Lackschicht (7) gedrückt wird.

2. Verfahren nach Anspruch 1, **dadurch gekennzeichnet, dass** die mindestens eine Haftvermittlerschicht (8) mit einer Schichtdicke im Bereich von 0,5 bis 12 µm, vorzugsweise im Bereich von 1 bis 10 µm, besonders bevorzugt im Bereich von 2 bis 5 µm, bezogen auf den Trockenzustand der Haftvermittlerschicht (8), auf das Trägermaterial (5) aufgebracht wird.

3. Verfahren nach Anspruch 1 oder 2, **dadurch gekennzeichnet, dass** für die Haftvermittlerschicht (8) ein Haftvermittler verwendet wird, der 10 bis 90 Gew.-%, vorzugsweise 40 bis 70 Gew.-% acryliertes Oligomer, 5 bis 30 Gew.-% Reaktivverdünner, 0,5 bis 10 Gew.-% auf UV-Strahlung reagierenden Photoinitiator und
optional 0,1 bis 3 Gew.-% eines oder mehrerer Additive aus einer Gruppe umfassend Entschäumer und Substratnetzmittel enthält, wobei sich die Mengen aller in dem Haftvermittler enthaltenen Bestandteile auf 100 Gew.-% addieren.

4. Verfahren nach Anspruch 1 oder 2, **dadurch gekennzeichnet, dass** für die Haftvermittlerschicht (8) ein Haftvermittler verwendet wird, der 10 bis 90 Gew.-%, vorzugsweise 40 bis 70 Gew.-% acrylierte Oligomer-Dispersion und/oder acrylierte Oligomer-Emulsion, 5 bis 30 Gew.-% Reaktivverdünner, 0,5 bis 10 Gew.-% auf UV-Strahlung reagierenden Photoinitiator und optional 0,1 bis 3 Gew.-% eines oder mehrerer Additive aus einer Gruppe umfassend Entschäumer und Substratnetzmittel enthält, wobei sich die Mengen aller in dem Haftvermittler enthaltenen Bestandteile auf 100 Gew.-% addieren.

5. Verfahren nach einem der Ansprüche 1 bis 4, **dadurch gekennzeichnet, dass** für die UV-härtbare Lackschicht (7) ein Lack verwendet wird, der 30 bis 95 Gew.-% acryliertes Oligomer,
10 bis 70 Gew.-% mono- oder multifunktionales Monomer,
1 bis 5 Gew.-% Photoinitiator, und optional
1 bis 6 Gew.-% eines oder mehrerer Additive aus einer Gruppe umfassend Entschäumer, Substratnetzmittel, Release-Additive, Wachse und Antiabsetzmittel enthält, wobei sich die Mengen aller in dem UV-härtbaren Lack enthaltenen Bestandteile auf 100 Gew.-% addieren.

6. Verfahren nach einem der Ansprüche 1 bis 5, **dadurch gekennzeichnet, dass** der Haftvermittler und/oder der für die UV-härtbare Lackschicht (7) verwendete Lack Urethanacrylat, Polyesteracrylat, Epoxyacrylat oder eine Mischung aus zwei oder drei dieser Acrylate als acryliertes Oligomer enthalten/enthält.

7. Verfahren nach einem der Ansprüche 1 bis 6, **dadurch gekennzeichnet, dass** die dreidimensionale Oberflächenstruktur (13) mittels eines mechanischen Prägewerkzeuges, vorzugsweise einer Prägewalze (3, 3') oder eines platten- oder bahnförmigen Strukturgebers, erzeugt wird.

8. Verfahren nach einem der Ansprüche 1 bis 6, **dadurch gekennzeichnet, dass** die dreidimensionale Oberflächenstruktur (13') durch Bestrahlung mittels einer UV-Strahlungsquelle (20) erzeugt wird, wobei die UV-Strahlungsquelle UV-Licht mit einer Wellenlänge im Bereich von 100 bis 230 nm, bevorzugt im Bereich von 130 bis 190 nm, besonders bevorzugt im Bereich von 170 bis 175 nm, insbesondere bevorzugt von 172 nm, emittiert.

9. Verfahren nach einem der Ansprüche 1 bis 8, **dadurch gekennzeichnet, dass** als bahnförmiges Trägermaterial (5) ein für energiereiche Strahlung, insbesondere für UV-Licht zumindest teilweise durchlässiges bahnförmiges Trägermaterial (5) aus Papier und/oder Kunststoff verwendet wird.

10. Verfahren nach einem der Ansprüche 1 bis 7 oder 9, **dadurch gekennzeichnet, dass** ein teilweises Härten der Lackschicht (7) durch Bestrahlung mit energiereicher Strahlung, vorzugsweise UV-Licht während des Erzeugens der dreidimensionalen Oberflächenstruktur (13, 13') in der Weise durchgeführt wird, dass die Bestrahlung zumindest teilweise von der der strukturierten Oberfläche abgewandten Seite des Trägermaterials (5) aus erfolgt.

11. Verfahren nach einem der Ansprüche 1 bis 10, **dadurch gekennzeichnet, dass** als bahnförmiges Trägermaterial (5) eine Materialbahn aus Papier verwendet wird, wobei zur Herstellung der Haftvermittlerschicht (8) ein wässriger Haftvermittler auf das Trägermaterial (5) aufgetragen wird, wobei die Haftvermittlerschicht (8) vor dem Aufbringen der UV-härtbaren Lackschicht (7) auf dieselbe zumindest im Oberflächenbereich getrocknet wird, und wobei die Trocknung unter Anwendung von UV-Strahlung und Temperaturen im Bereich von 80° C bis 160° C, vorzugsweise im Bereich von 90° C bis 140° C, besonders bevorzugt im Bereich von 100° C bis 120° C durchgeführt wird.

12. Verfahren nach einem der Ansprüche 1 bis 10, **dadurch gekennzeichnet, dass** als bahnförmiges Trägermaterial (5) eine Kunststofffolie oder Papier verwendet wird, wobei die Haftvermittlerschicht (8) vor dem Aufbringen der UV-härtbaren Lackschicht (7) auf die Haftvermittlerschicht (8) mittels energiereicher Strahlung, vorzugsweise UV-Strahlung zumindest soweit gehärtet wird, dass die Haftvermittlerschicht (8) an ihrer Oberfläche fest und/oder im Wesentlichen nicht klebend ist, wobei der Photoinitiator der Haftvermittlerschicht (8) geeignet ist, Licht mit einer Wellenlänge im Bereich von 250 bis 350 nm, vorzugsweise im Bereich von 270 bis 330 nm zu absorbieren, und wobei die Haftvermittlerschicht (8) mit einer UV-Strahlungsdosis im Bereich von 60 bis 200 mJ/cm², vorzugsweise 100 bis 160 mJ/cm² gehärtet wird.

13. Verfahren nach einem der Ansprüche 1 bis 12, **dadurch gekennzeichnet, dass** die UV-härtbare Lackschicht mittels mindestens eines Quecksilberdampf-Mitteldruckstrahlers (16) oder mindestens eines UV-C-Strahlers endausgehärtet wird, wobei die Endaushärtung vorzugsweise unter Anwendung einer UV-Strahlungsdosis im Bereich von 500 bis 3.000 mJ/cm² durchgeführt wird.

14. Verfahren nach einem der Ansprüche 1 bis 13, **dadurch gekennzeichnet, dass** der Photoinitiator des UV-härtbaren Lacks geeignet ist, Licht mit einer Wellenlänge im Bereich von 360 bis 420 nm, vorzugsweise im Bereich von 390 bis 400 nm zu absorbieren.

15. Verfahren nach einem der Ansprüche 1 bis 14, **dadurch gekennzeichnet, dass** die dreidimensionale Oberflächenstruktur (13) in der UV-härtbaren Lackschicht (7) in der Weise ausgebildet wird, dass die dreidimensionale Oberflächenstruktur (13) nach der Aushärtung der Lackschicht (7) eine gemittelte Rautiefe Rz nach DIN EN ISO 4287 (2009-11) im Bereich von 10 bis 200 µm, vorzugsweise im Bereich von 40 bis 200 µm, besonders bevorzugt im Bereich von 100 bis 200 µm aufweist.

16. Verfahren nach einem der Ansprüche 1 bis 15, **dadurch gekennzeichnet, dass** zum Formen der dreidimensionalen Oberflächenstruktur (13) eine Prägewalze (3, 3') verwendet wird, wobei der aus dem bahnförmigem Trägermaterial (5), der Haftvermittlerschicht (8) und der Lackschicht (7) gebildete Verbund mit einem Umschlingungswinkel im Bereich von vorzugsweise 60° bis 200°, besonders bevorzugt im Bereich von 100° bis 180° um die Prägewalze (3, 3') geführt wird.

17. Bahnförmiges Verbundmaterial (30, 30'), vorzugsweise hergestellt nach einem Verfahren gemäß einem der voranstehenden Ansprüche 1 bis 16, mit einem bahnförmigen Trägermaterial (5) aus Papier und/oder Kunststoff und einer auf dem Trägermaterial (5) aufgebrachten Lackschicht ( 7) aus acryliertem Oligomer, die eine dreidimensionale Oberflächenstruktur (13, 13') aufweist, **dadurch gekennzeichnet, dass** die Lackschicht (7) über mindestens eine Haftvermittlerschicht (8) beinhaltend acryliertes Oligomer, einen Reaktivverdünner und einen auf UV-Strahlung reagierenden Photoinitiator mit dem Trägermaterial (5) verbunden ist, wobei das Verbundmaterial (30, 30') im fertigen Zustand eine mittlere Martenshärte nach DIN EN ISO 14577-1 (2003-05) im Bereich von 10 bis 80 N/mm², vorzugsweise im Bereich von 30 bis 80 N/mm² aufweist, wobei der zur Messung der Martenshärte als Prüfkörper verwendete Eindringkörper in die strukturierte Oberfläche der Lackschicht (7) gedrückt wurde.

18. Verwendung des Verbundmaterials (30, 30') nach Anspruch 17 als Strukturgeber (17) zum Texturieren einer prägefähigen Materialoberfläche, vorzugsweise in einer Presse zur Herstellung von dekorativem Laminat unter Einwirkung von Wärme und Druck oder in einem Beschichtungsverfahren, bei dem eine Oberfläche eines plattenförmigen Werkstoffs nach Auftrag von UV-Lack in Kontakt mit einer transparenten Folie in Form des Verbundmaterials (30, 30') gebracht und durch diese hindurch mittels UV-Licht getrocknet und/oder gehärtet wird.

19. Verwendung des Verbundmaterials (30, 30') nach Anspruch 17 als Beschichtungsmaterial für Werkstückoberflächen, vorzugsweise für plattenförmige Werkstücke (40, 40'), insbesondere für Oberflächen von Werkstücken aus Holzwerkstoff, Schichtstoff, Kunststoff und/oder Laminat oder aus Kombinationen von mindestens zwei solcher Werkstoffe.

## Claims

1. Method for producing a web-like composite material (30, 30') having a structured surface, comprising the steps of
providing a web-like carrier material (5) made of paper and/or plastic, applying a UV-curable lacquer layer (7) of acrylated oligomer onto the carrier material (5),
producing a three-dimensional surface structure (13, 13') in the lacquer layer (7) applied to the carrier material (5) and
at least partial curing of the lacquer layer (7) by irradiation with high-energy radiation, preferably UV light,
**characterized in that** before the UV-curable lacquer layer (7) is applied, at least one adhesion promoter layer (8) containing acrylated oligomer, a reactive diluent and a photoinitiator reacting to high-energy radiation, preferably UV radiation, is applied onto the carrier material (5), and **in that** the lacquer layer (7) having the three-dimensional surface structure (13, 13') is cured to such an extent that the composite material (30, 30') in the finished state has an average Martens hardness according to DIN EN ISO 14577-1 (2003-05) in the range from 10 to 80 N/mm², preferably in the range from 30 to 80 N/mm², the indenter used as a test body for measuring the Martens hardness being pressed into the structured surface of the lacquer layer (7).

2. Method according to claim 1, **characterized in that** the at least one adhesion promoter layer (8) is applied onto the carrier material (5) with a layer thickness in the range from 0.5 to 12 µm, preferably in the range from 1 to 10 µm, particularly preferably in the range from 2 to 5 µm, based on the dry state of the adhesion promoter layer (8).

3. Method according to claim 1 or 2, **characterized in that** an adhesion promoter is used for the adhesion promoter layer (8), which contains
10 to 90% by weight, preferably 40 to 70% by weight, of acrylated oligomer,
5 to 30% by weight of reactive diluent, 0.5 to 10% by weight of photoinitiator which reacts to UV radiation and
optionally 0.1 to 3% by weight of one or more additives from a group comprising defoamers and substrate wetting agents, the amounts of all components contained in the adhesion promoter adding up to 100% by weight.

4. Method according to claim 1 or 2, **characterized in that** an adhesion promoter is used for the adhesion promoter layer (8), which contains 10 to 90% by weight, preferably 40 to 70% by weight, of acrylated oligomer dispersion and/or acrylated oligomer emulsion, 5 to 30% by weight of reactive diluent, 0.5 to 10% by weight of photoinitiator which reacts to UV-radiation, and optionally 0.1 to 3% by weight of one or more additives from a group comprising defoamers and substrate wetting agents, the amounts of all components contained in the adhesion promoter add up to 100 % by weight.

5. Method according to any one of claims 1 to 4, **characterized in that** a lacquer is used for the UV-curable lacquer layer (7) which contains
30 to 95% by weight of acrylated oligomer,
10 to 70% by weight of mono- or multifunctional monomer,
1 to 5% by weight of photoinitiator, and optionally
1 to 6% by weight of one or more additives from a group comprising defoamers, substrate wetting agents, release additives, waxes and anti-settling agents,
wherein the amounts of all components contained in the UV-curable lacquer add up to 100% by weight.

6. Method according to any one of claims 1 to 5, **characterized in that** the adhesion promoter and/or the lacquer used for the UV-curable lacquer layer (7) contain/contains urethane acrylate, polyester acrylate, epoxy acrylate or a mixture of two or three of these acrylates as an acrylated oligomer.

7. Method according to any one of claims 1 to 6, **characterized in that** the three-dimensional surface structure (13) is produced by means of a mechanical embossing tool, preferably an embossing roller (3, 3') or a plate-like or web-like structuring means.

8. Method according to any one of claims 1 to 6, **characterized in that** the three-dimensional surface structure (13') is produced by irradiation by means of a UV radiation source (20), the UV radiation source emitting UV light with a wavelength in the range from 100 to 230 nm, preferably in the range from 130 to 190 nm, particularly preferably in the range from 170 to 175 nm, particularly preferably 172 nm.

9. Method according to any one of claims 1 to 8, **characterized in that** the web-like carrier material (5) used is a web-like carrier material (5) made of paper and/or plastic which is at least partially transmissive to high-energy radiation, in particular to UV light.

10. Method according to any one of claims 1 to 7 or 9, **characterized in that** a partial hardening of the lacquer layer (7) is carried out by irradiation with high-energy radiation, preferably UV light, during the production of the three-dimensional surface structure (13, 13') in such a way that the irradiation is carried out at least partially from the side of the carrier material (5) facing away from the structured surface.

11. Method according to any one of claims 1 to 10, **characterized in that** a material web of paper is used as the web-like carrier material (5), an aqueous adhesion promoter being applied onto the carrier material (5) to produce the adhesion promoter layer (8), the adhesion promoter layer (8) being dried at least in the surface region before the UV-curable lacquer layer (7) is applied thereon, and the drying being carried out using UV radiation and temperatures in the range from 80° C to 160° C, preferably in the range from 90° C to 140° C, particularly preferably in the range from 100° C to 120° C.

12. Method according to any one of claims 1 to 10, **characterized in that** a plastic film or paper is used as the web-like carrier material (5), the adhesion promoter layer (8) being cured at least to such an extent by means of high-energy radiation, preferably UV radiation, before the UV-curable lacquer layer (7) is applied to the adhesion promoter layer (8), that the adhesion promoter layer (8) is solid and/or substantially non-adhesive on its surface, wherein the photoinitiator of the adhesion promoter layer (8) is suitable for absorbing light with a wavelength in the range from 250 to 350 nm, preferably in the range from 270 to 330 nm, and wherein the adhesion promoter layer (8) is cured with a UV radiation dose in the range from 60 to 200 mJ/cm², preferably 100 to 160 mJ/cm².

13. Method according to any one of claims 1 to 12, **characterized in that** the UV-curable lacquer layer is finally cured by means of at least one mercury vapour medium-pressure emitter (16) or at least one UV-C emitter, the final curing preferably being carried out using a UV radiation dose in the range from 500 to 3,000 mJ/cm².

14. Method according to any one of claims 1 to 13, **characterized in that** the photoinitiator of the UV-curable lacquer is suitable for absorbing light having a wavelength in the range from 360 to 420 nm, preferably in the range from 390 to 400 nm.

15. Method according to any one of claims 1 to 14, **characterized in that** the three-dimensional surface structure (13) is formed in the UV-curable lacquer layer (7) in such a way that the three-dimensional surface structure (13) has an average roughness depth Rz according to DIN EN ISO 4287 (2009-11) in the range from 10 to 200 µm, preferably in the range from 40 to 200 µm, particularly preferably in the range from 100 to 200 µm, after the curing of the lacquer layer (7).

16. Method according to any one of claims 1 to 15, **characterized in that** an embossing roller (3, 3') is used to form the three-dimensional surface structure (13), the composite formed from the web-like carrier material (5), the adhesion promoter layer (8) and the lacquer layer (7) being guided around the embossing roller (3, 3') at a wrap angle in the range from preferably 60° to 200°, particularly preferably in the range from 100° to 180°.

17. Web-like composite material (30, 30'), preferably produced by a method according to any one of the preceding claims 1 to 16, with a web-like carrier material (5) of paper and/or plastic and a lacquer layer (7) of acrylated oligomer applied to the carrier material (5), which has a three-dimensional surface structure (13, 13'), **characterized in that** the lacquer layer (7) is connected to the carrier material (5) via at least one adhesion promoter layer (8) containing acrylated oligomer, a reactive diluent and a photoinitiator which reacts to UV radiation, the composite material (30, 30') having, in the finished state, an average Martens hardness according to DIN EN ISO 14577-1 (2003-05) in the range from 10 to 80 N/mm², preferably in the range from 30 to 80 N/mm², the indenter used as a test body for measuring the Martens hardness having been pressed into the structured surface of the lacquer layer (7).

18. Use of the composite material (30, 30') according to claim 17 as a structuring means (17) for texturing a material surface capable of being embossed, preferably in a press for producing decorative laminate under the action of heat and pressure or in a coating method in which a surface of a plate-like material is brought into contact with a transparent film in the form of the composite material (30, 30') after application of UV lacquer and is dried and/or cured through it by means of UV light.

19. Use of the composite material (30, 30') according to claim 17 as a coating material for workpiece surfaces, preferably for panel-shaped workpieces (40, 40'), in particular for surfaces of workpieces made of wood-based material, laminate, plastic and/or laminate or of combinations of at least two such materials.

## Revendications

1. Procédé de fabrication d'un matériau composite (30, 30') en forme de bande, présentant une surface structurée, comportant les étapes :
de fourniture d'un matériau de support (5) en forme de bande en papier et/ou en matière plastique,
d'application d'une couche de vernis durcissable aux UV (7) à base d'oligomère acrylé sur le matériau de support (5),
de création d'une structure de surface tridimensionnelle (13, 13') dans la couche de vernis (7) appliquée sur le matériau de support (5) et
de durcissement, au moins en partie, de la couche de vernis (7) par irradiation avec un rayonnement à haute énergie, de préférence de la lumière UV,
**caractérisé en ce que**, avant l'application de la couche de vernis durcissable aux UV (7), au moins une couche de promoteur d'adhérence (8) contenant de l'oligomère acrylé, un diluant réactif et un photoamorceur réagissant à un rayonnement à haute énergie, de préférence à un rayonnement UV, est appliquée sur le matériau de support (5), et **en ce que** la couche de vernis (7) présentant la structure de surface tridimensionnelle (13, 13') est durcie dans la mesure où le matériau composite (30, 30') présente à l'état final une dureté de Martens moyenne selon la DIN EN ISO 14577-1 (2003-05) comprise dans la gamme allant de 10 à 80 N/mm², de préférence dans la gamme allant de 30 à 80 N/mm², dans lequel le pénétrateur utilisé en tant qu'éprouvette pour la mesure de la dureté de Martens est enfoncé dans la surface structurée de la couche de vernis (7).

2. Procédé selon la revendication 1, **caractérisé en ce que** l'au moins une couche de promoteur d'adhérence (8) est appliquée sur le matériau de support (5) avec une épaisseur de couche comprise dans la gamme allant de 0,5 à 12 µm, de préférence dans la gamme allant de 1 à 10 µm, de préférence encore dans la gamme allant de 2 à 5 µm, par rapport à l'état sec de la couche de promoteur d'adhérence (8).

3. Procédé selon la revendication 1 ou la revendication 2, **caractérisé en ce que**, pour la couche de promoteur d'adhérence (8), il est utilisé un promoteur d'adhérence qui contient de 10 à 90 % en poids, de préférence de 40 à 70 % en poids d'oligomère acrylé, de 5 à 30 % en poids de diluant réactif, de 0,5 à 10 % en poids de photoamorceur réagissant à un rayonnement UV et facultativement de 0,1 à 3 % en poids d'un ou de plusieurs additifs issus d'un groupe comprenant des agents antimoussants et des agents mouillants de substrat, dans lequel la somme des quantités de tous les constituants contenus dans le promoteur d'adhérence est de 100 % en poids.

4. Procédé selon la revendication 1 ou la revendication 2, **caractérisé en ce que**, pour la couche de promoteur d'adhérence (8), il est utilisé un promoteur d'adhérence qui contient de 10 à 90 % en poids, de préférence de 40 à 70 % en poids de dispersion d'oligomère acrylé et/ou d'émulsion d'oligomère acrylé, de 5 à 30 % en poids de diluant réactif, de 0,5 à 10 % en poids de photoamorceur réagissant à un rayonnement UV et facultativement de 0,1 à 3 % en poids d'un ou de plusieurs additifs issus d'un groupe comprenant des agents antimoussants et des agents mouillants de substrat, dans lequel la somme des quantités de tous les constituants contenus dans le promoteur d'adhérence est de 100 % en poids.

5. Procédé selon l'une des revendications 1 à 4, **caractérisé en ce que**, pour la couche de vernis durcissable aux UV (7), il est utilisé une vernis qui contient
de 30 à 95 % en poids d'oligomère acrylé,
de 10 à 70 % en poids de monomère mono- ou multifonctionnel,
de 1 à 5 % en poids de photoamorceur, et facultativement
de 1 à 6 % en poids d'un ou de plusieurs additifs issus d'un groupe comprenant des agents antimoussants, des agents mouillants de substrat, des additifs antiadhérents, des cires et des agents d'antiredéposition, dans lequel la somme des quantités de tous les constituants contenus dans la vernis durcissable aux UV est de 100 % en poids.

6. Procédé selon l'une des revendications 1 à 5, **caractérisé en ce que** le promoteur d'adhérence et/ou la vernis utilisée pour la couche de vernis durcissable aux UV (7) contiennent/contient en tant qu'oligomère acrylé de l'acrylate d'uréthane, de l'acrylate de polyester, de l'époxyacrylate ou un mélange de deux ou trois de ces acrylates.

7. Procédé selon l'une des revendications 1 à 6, **caractérisé en ce que** la structure de surface tridimensionnelle (13) est créée au moyen d'un outil d'estampage mécanique, de préférence d'un cylindre d'estampage (3, 3') ou d'un élément structurant en forme de plaque ou de bande.

8. Procédé selon l'une des revendications 1 à 6, **caractérisé en ce que** la structure de surface tridimensionnelle (13') est créée par irradiation au moyen d'une source de rayonnement UV (20), dans lequel la source de rayonnement UV émet de la lumière UV avec une longueur d'onde comprise dans la gamme allant de 100 à 230 nm, de préférence dans la gamme allant de 130 à 190 nm, de préférence encore dans la gamme allant de 170 à 175 nm, de manière particulièrement préférée une longueur d'onde de 172 nm.

9. Procédé selon l'une des revendications 1 à 8, **caractérisé en ce que**, en tant que matériau de support (5) en forme de bande, il est utilisé un matériau de support (5) en forme de bande en papier et/ou en matière plastique au moins en partie perméable à un rayonnement à haute énergie, en particulier à de la lumière UV.

10. Procédé selon l'une des revendications 1 à 7 ou 9, **caractérisé en ce qu'**un durcissement partiel de la couche de vernis (7) est mis en oeuvre par irradiation avec un rayonnement à haute énergie, de préférence de la lumière UV, pendant la création de la structure de surface tridimensionnelle (13, 13') de sorte que l'irradiation s'effectue au moins en partie à partir du côté opposé à la surface structurée du matériau de support (5).

11. Procédé selon l'une des revendications 1 à 10, **caractérisé en ce que**, en tant que matériau de support (5) en forme de bande, il est utilisé une bande de matériau en papier, dans lequel, pour la fabrication de la couche de promoteur d'adhérence (8), un promoteur d'adhérence aqueux est déposé sur le matériau de support (5), dans lequel la couche de promoteur d'adhérence (8) est séchée au moins dans la zone superficielle avant l'application sur celle-ci de la couche de vernis durcissable aux UV (7), et dans lequel le séchage est mis en oeuvre à l'aide d'un rayonnement UV et de températures comprises dans la gamme allant de 80 °C à 160 °C, de préférence dans la gamme allant de 90 °C à 140 °C, de préférence encore dans la gamme allant de 100 °C à 120 °C.

12. Procédé selon l'une des revendications 1 à 10, **caractérisé en ce que**, en tant que matériau de support (5) en forme de bande, il est utilisé une feuille de matière plastique ou du papier, dans lequel la couche de promoteur d'adhérence (8) est durcie avant l'application de la couche de vernis durcissable aux UV (7) sur la couche de promoteur d'adhérence (8) au moyen d'un rayonnement à haute énergie, de préférence d'un rayonnement UV, au moins dans la mesure où la couche de promoteur d'adhérence (8) est solide et/ou essentiellement non collante au niveau de sa surface, dans lequel le photoamorceur de la couche de promoteur d'adhérence (8) est approprié pour absorber de la lumière avec une longueur d'onde comprise dans la gamme allant de 250 à 350 nm, de préférence dans la gamme allant de 270 à 330 nm, et dans lequel la couche de promoteur d'adhérence (8) est durcie avec une dose de rayonnement UV comprise dans la gamme allant de 60 à 200 mJ/cm², de préférence de 100 à 160 mJ/cm².

13. Procédé selon l'une des revendications 1 à 12, **caractérisé en ce que** la couche de vernis durcissable aux UV est durcie au stade final au moyen d'au moins une lampe moyenne pression à vapeur de mercure (16) ou d'au moins une lampe à UV-C, dans lequel le durcissement final est mis en oeuvre de préférence à l'aide d'une dose de rayonnement UV comprise dans la gamme allant de 500 à 3000 mJ/cm².

14. Procédé selon l'une des revendications 1 à 13, **caractérisé en ce que** le photoamorceur de la vernis durcissable aux UV est approprié pour absorber de la lumière avec une longueur d'onde comprise dans la gamme allant de 360 à 420 nm, de préférence dans la gamme allant de 390 à 400 nm.

15. Procédé selon l'une des revendications 1 à 14, **caractérisé en ce que** la structure de surface tridimensionnelle (13) est formée dans la couche de vernis durcissable aux UV (7) de sorte que la structure de surface tridimensionnelle (13) présente après le durcissement de la couche de vernis (7) une profondeur de rugosité Rz moyennée selon la DIN EN ISO 4287 (2009-11) comprise dans la gamme allant de 10 à 200 µm, de préférence dans la gamme allant de 40 à 200 µm, de préférence encore dans la gamme allant de 100 à 200 µm.

16. Procédé selon l'une des revendications 1 à 15, **caractérisé en ce que**, pour le façonnage de la structure de surface tridimensionnelle (13), il est utilisé un cylindre d'estampage (3, 3'), dans lequel le composite formé à partir du matériau de support (5) en forme de bande, de la couche de promoteur d'adhérence (8) et de la couche de vernis (7) est guidé avec un angle d'enroulement compris dans la gamme allant de préférence de 60° à 200°, de préférence encore dans la gamme allant de 100° à 180°, autour du cylindre d'estampage (3, 3').

17. Matériau composite (30, 30') en forme de bande, fabriqué de préférence selon un procédé selon l'une des revendications précédentes 1 à 16, avec un matériau de support (5) en forme de bande en papier et/ou en matière plastique et une couche de vernis (7) à base d'oligomère acrylé appliquée sur le matériau de support (5), laquelle présente une structure de surface tridimensionnelle (13, 13'), **caractérisé en ce que** la couche de vernis (7) est reliée au matériau de support (5) par l'intermédiaire d'au moins une couche de promoteur d'adhérence (8) contenant de l'oligomère acrylé, un diluant réactif et un photoamorceur réagissant à un rayonnement UV, le matériau composite (30, 30') présentant à l'état final une dureté de Martens moyenne selon la DIN EN ISO 14577-1 (2003-05) comprise dans la gamme allant de 10 à 80 N/mm², de préférence dans la gamme allant de 30 à 80 N/mm², dans lequel le pénétrateur utilisé en tant qu'éprouvette pour la mesure de la dureté de Martens a été enfoncé dans la surface structurée de la couche de vernis (7).

18. Utilisation du matériau composite (30, 30') selon la revendication 17 en tant qu'élément structurant (17) pour la texturation d'une surface de matériau estampable, de préférence dans une presse pour la fabrication d'un stratifié décoratif sous l'action de la chaleur et de la pression ou dans un procédé de revêtement dans lequel une surface d'une matière en forme de plaque, après dépôt de vernis UV, est mise en contact avec une feuille transparente sous la forme du matériau composite (30, 30') et est séchée et/ou durcie à travers celle-ci au moyen de lumière UV.

19. Utilisation du matériau composite (30, 30') selon la revendication 17 en tant que matériau de revêtement pour des surfaces de pièces, de préférence pour des pièces (40, 40') en forme de plaque, en particulier pour des surfaces de pièces à base de matière dérivée du bois, de laminé, de matière plastique et/ou de stratifié ou à base de combinaisons d'au moins deux de ces matières.
